# EUROPEAN PATENT SPECIFICATION

(11) **EP 3 424 657 B1**
(45) Date of publication and mention of the grant of the patent: **30.10.2024**
(21) Application number: 17397518.6
(22) Date of filing: 07.07.2017
(51) Int. Cl.: B27K 3/02, B05D 7/06, B27D 1/04, B32B 21/13, B32B 21/14

(54) **A FIRE RESISTANT PLYWOOD PANEL AND A METHOD FOR IMPROVING FIRE RESISTANCE OF A PLYWOOD PANEL**
FEUERBESTÄNDIGE SPERRHOLZPLATTE UND VERFAHREN ZUR VERBESSERUNG DER FEUERBESTÄNDIGKEIT EINER SPERRHOLZPLATTE
PANNEAU DE CONTRE-PLAQUÉ RÉSISTANT AU FEU ET PROCÉDÉ PERMETTANT D'AMÉLIORER LA RÉSISTANCE AU FEU D'UN PANNEAU DE CONTRE-PLAQUÉ

(43) Date of publication of application: 09.01.2019
(73) Proprietor: UPM Plywood Oy, 15140 Lahti (FI)
(72) Inventor: KOSKI, Anna, 15610 LAHTI (FI); HÄRKÖNEN, Riku, 15240 LAHTI (FI)
(74) Representative: Berggren Oy

(56) References cited:
- CN-C- 1 045 266
- DE-U1- 202015 103 202
- JP-A- 2016 007 822
- US-A1- 2011 108 782

## Description

### Technical field

The invention relates to plywood panels. The invention relates to plywood panels suitable for use as constructional elements, such as walls or floorings. The invention relates to fire resistant plywood panels. The invention relates to methods for improving fire resistance of plywood panels.

### Background

Plywood is a well-known wood based material. Being wood based, plywood as such is typically not very resistant to fire. It is known to apply fire retardant to plywood in order to improve fire resistance. The fire retardant may be applied to a plywood panel under high pressure and/or in vacuum followed by heat-assisted drying.

Wood material can be treated with fire retardant chemicals by e.g. vacuum pressure impregnation that is carried out in a pressure vessel. However, for plywood, this conventional method of applying preservative treatment is not appropriate due to the low penetration of the chemical through the glue-lines, the unsuitable geometry of the pressure vessels for plywood, and the batch type impregnation process. In addition, pressure impregnation and additional drying step needed may destroy the wood cell membranes, induce surface and internal cracks, which may adversely affect the strength of plywood.

The prior art further recognizes to treat plywood through the glue-lines, wherein the protecting chemical, such as fire retardant, is mixed with the binder composition used to glue together the veneers to form plywood. The glue-line impregnation method can be integrated into lay-up operations, but it requires the fire retardant chemical to be stable under extreme process conditions such as heat, pressure and high pH that occur during the lay-up and hot pressing steps of the plywood. These process conditions can result in degradation of the fire retardant and thus loss of its activity during the service life of the end product. In addition, the used fire retardant has to be able to penetrate from the binder composition into the wood material in order to provide the desired protection level.

In the field of plywood, the document DE202015103202U1 discloses plywood that has a number of veneers and a coating on at least one surface of the plywood. Therein the surface of at least the other of the outermost veneers of the plywood is sanded or sanded and a coating is provided on the sanded surface. The coating comprises a hydrophobic material and a film comprising a coating material.

In the field of fire-retardant plywood, the invention of the document CN1045266C is a flame-retardant plywood, which is composed of a single board, a fire-proof adhesive and a flame-retardant. That invention uses a special fireproof adhesive, whereby the veneer does not need to be flame-retardant before hot pressing. The document US2011/0108782A1 relates to wood-base materials made flame-retardant with halogen-free organic phosphorus compounds, and to compositions and processes for their production and their use. The invention of the document JP2016007822A relates to the flame retardant for wooden materials used for the incombustibility of wooden materials, such as a board or plate material, a plywood, the veneer for plywoods, a glulam, a particle board, a middle density fibre board (MDF), paper, and a pulp. In that invention the flame retardant is for wooden materials and is consists of aqueous solution containing phosphonic acid and ammonia. The flame retardant includes phosphonic acid of the range of 35-55 mass %, and ammonia of the range of 7.2-14 mass % with respect to whole quantity of an aqueous solution.

It has been noticed, that application of a high pressure decreases the strength of the plywood panel. Therefore, improving the fire resistance of plywood panels will at the same time reduce the strength. In the alternative, if pressure is not used, the level of impregnation of the fire retardant may remain so low that the fire resistance properties of the panel are not achieved.

The inventors have recognized the need for a method to protect plywood against the fire while remaining the other properties of the plywood required for its end-use applications.

### Summary

A method for improving fire resistance of a plywood panel is disclosed. Sufficient level of impregnation of fire retardant is achieved without using pressure assisted impregnation. Sufficient level of impregnation of fire retardant is achieved without using heat assisted drying. Thus, the mechanical strength of the panel remains high in the process. Moreover, because high pressure is not used, a significant amount of the fire retardant remains in the surface veneer layers, which are most vulnerable to fire. In this way, since most of the fire retardant is used in the most vulnerable layers, a small amount of fire retardant suffices, which makes the process cost-efficient. Moreover, the density (kg/m³) of plywood remains low in the treatment, which helps moving the panels at a construction site. High amount of impregnation of the fire retardant into the surface veneer layers of the panel is achieved by a proper sanding of the surfaces of the plywood panel before applying the fire retardant. Furthermore, high amount of impregnation of the fire retardant into the surface veneer layers of the panel is achieved by applying the fire retardant at a certain temperature. Preferable amounts of fire retardant in connection with preferable surface veneer thickness are also disclosed.

The invention regarding the method is disclosed in independent claim 1. The invention regarding a corresponding fire resistant panel is disclosed in independent claim 11. Preferred embodiments are disclosed in the dependent claims and the description. Further embodiments are disclosed in the description.

### Brief description of the drawings

- Fig. 1a: shows, as a side view, a plywood panel,
- Fig. 1b: shows, as a side view, a plywood panel,
- Fig. 2a: shows, as a perspective view, a first surface of a plywood panel and a first sanding surface,
- Fig. 2b: shows, as a perspective view, a second surface of a plywood panel and a second sanding surface,
- Fig. 3a: shows, as a side view, applying liquid fire retardant solution onto the first surface by spraying,
- Fig. 3b: shows, as a side view, arranging the plywood panels into a stack in order to press the liquid fire retardant solution into the plywood panel,
- Fig. 4a: shows, as a side view, veneer layers of plywood and grain directions therein,
- Fig. 4b: shows, as a perspective view, veneer layers of plywood and grain directions therein,
- Fig. 4c: shows, as a perspective view, a veneer layer of plywood,
- Fig. 4d: shows, as a perspective view, a veneer,
- Fig. 5a: shows a plywood panel coated from both sides not part of the invention,
- Fig. 5b: shows a plywood panel coated from only one side, and
- Figs. 6a to 6c: show three fire resistance test conditions for a plywood panel.

### Detailed description

The invention relates to a method for improving fire resistance of a plywood panel 100. The invention relates to a fire resistant plywood panel 100. In the method, fire retardant 300 is applied onto at lease a first surface 112 of a plywood panel 100 to improve fire resistance. Preferably, fire retardant 300 is applied onto two opposite surfaces 112, 122 of a plywood panel 100 to improve fire resistance. The fire retardant 300 may be a liquid fire retardant solution or liquefied during application thereof in order to impregnate the panel 100 with the fire retardant 300. In an embodiment, the fire retardant 300 is a liquid fire retardant solution 300. In an embodiment, the liquid fire retardant solution 300 comprises phosphorous. The phosphorous is bound to a chemical compound. Thus, the term "bound phosphorous" is used in this description. Thus, the expression "comprises bound phosphorous" means "comprises a chemical compound comprising phosphorous". An amount of bound phosphorous refers, however, to the amount of only the bound phosphorous, not the total amount of the chemical compound, to which the phosphorous is bound. Both the un-treated plywood panel that is to be treated, and the treated plywood panel, i.e. a fire resistant plywood panel, are referred to as a plywood panel. In the product claims, the term plywood panel refers to a treated panel, i.e. a fire resistant plywood panel. When considered applicable, the terms treated panel and untreated panel are also used to clarify the issue.

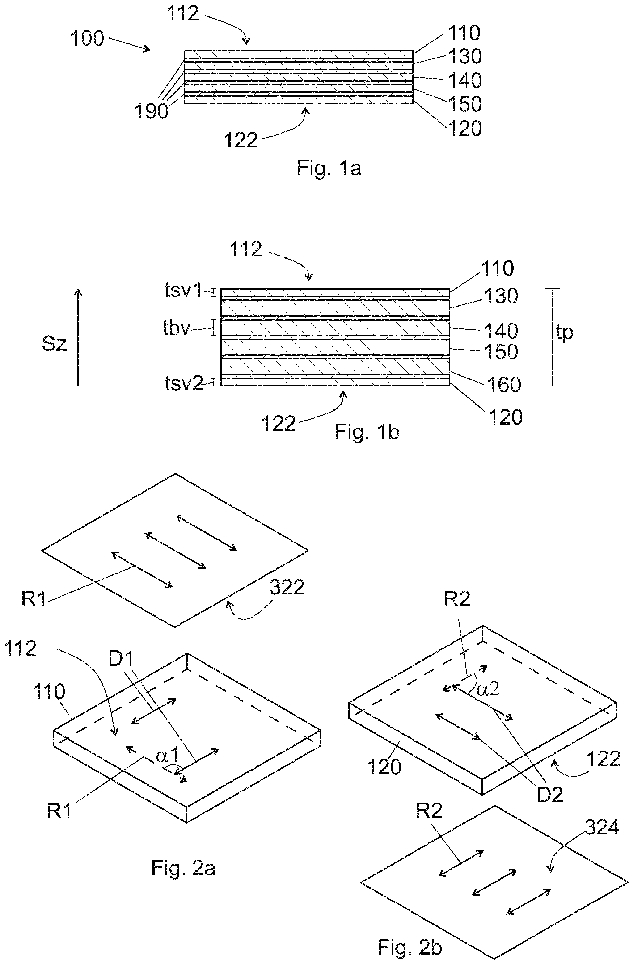

Fig. 1a shows, as a side view, a plywood panel 100. The method comprises receiving such a panel 100. A plywood panel 100 comprises a first veneer layer 110, a second veneer layer 120, and adhesive 190 in between the first veneer layer 110 and the second veneer layer 120. As is well known, a plywood panel 100 typically comprises at least three veneer layers, such as from 3 to 21 veneer layers. The embodiments, wherein the plywood panel 100 comprises from 5 to 11, such as 5, 7, or 9 veneer layers, are particularly suitable for constructional purposes. For these purposes, the thickness of the plywood panel 100 is preferably from 15 mm to 18 mm.

The numbering of the veneer layers herein is such that the first veneer layer 110 forms a first surface 112 of the uncoated plywood panel 100 and the second veneer layer 120 forms a second surface 122 of an uncoated plywood panel 100, if the panel is not coated. With the method, an uncoated plywood panel, or a plywood panel that is coated only from the second side, is treated to form a fire resistant plywood panel. However, such a treated plywood panel may be later coated e.g. by painting. A user of the panel should take into account that a coating may deteriorate the fire resistance of the panel. Therefore, the invention relates, in addition to the method, to plywood panels, of which at most one side is coated. The coating refers to a water-resistant coating, such as a polymer coating, in particular a coating comprising a polymerized resin, such as polymerized phenol formaldehyde and/or polymerized lignin-phenol formaldehyde resin. The treatment of a surface of an uncoated plywood panel by the fire retardant is not considered to form a coating onto the plywood panel, even if, at least on some locations of the treated surface, some fire retardant 300 may be present. For example, the second veneer layer 120 may be coated with polymerized phenol formaldehyde resin, while the wooden first surface 112 may be treated with the fire retardant 300.

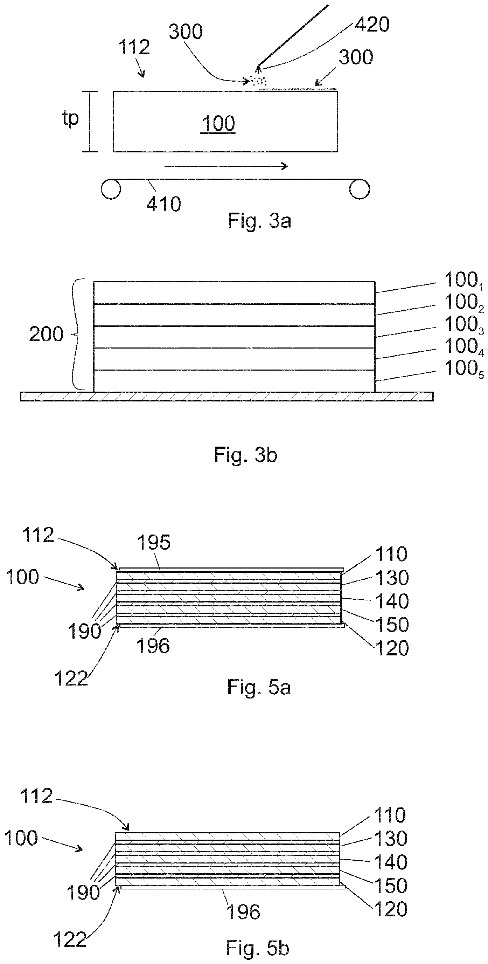

If coated, the surface 112, 122 of the panel is coated by a coating 195, 196 whereby the surface 112, 122 is transformed to an interface 112, 122 between the coating 195, 196 and a surface veneer 110, 120 (i.e. the first veneer 110 or the second veneer 120). Moreover, if the panel is coated from the side of the first veneer 110 by a first coating 195, the first veneer 110 extends, in the direction of the thickness tp of the panel 100 to the interface 112 between the first coating 195 and the first veneer 110. Moreover, if the panel is coated by a second coating 196 from the side of the second veneer 120, the second veneer 120 extends, in the direction of the thickness tp of the panel 100 to the interface 122 between the second coating 196 and the second veneer 120. The surfaces of an uncoated panel are indicated in Figs. 1a and 1b, while the interfaces of a coated panel are indicated in Figs. 5a and 5b.

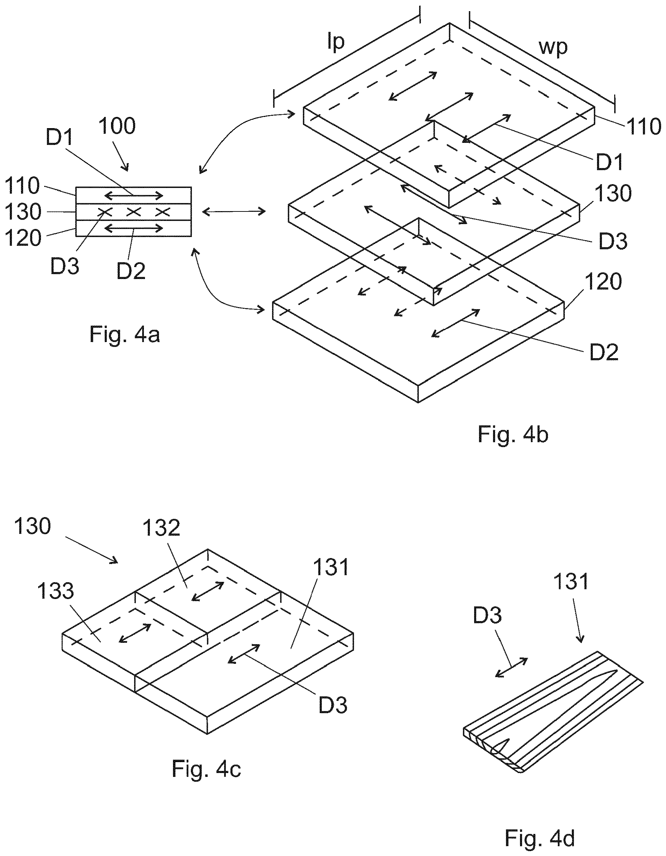

A thickness tp of the plywood panel 100 is left in between the first surface 112 and the second surface 122 (or first surface 112 and the second interface 122, if the second surface 122 of the panel is coated by the coating 196). Other veneer layers 130, 140, 150, if present, are arranged in between the first veneer layer 110 and the second veneer layer 120 in a direction Sz of thickness tp of the plywood panel 100, as indicated in Fig. 1b. The thickness tp of the panel is smaller than a length lp of the panel and a width wp of the panel 100 (see Fig. 4b). Correspondingly, all veneer layers of the plywood panel are left in between the surfaces (112, 122) thereof, or, if the panel is coated from the second side, in between the surface 112 and the interface 122 (see Figs. 1a and 5b).

Within a veneer layer of the plywood panel 100, the wood material has a grain orientation. In particular, the first veneer layer 110 comprises grains oriented in a first grain direction D1 and the second veneer layer 120 comprises grains oriented in a second grain direction D2. Such directions are shown e.g. in Figs. 2a, 2b, 4a, and 4b.

A veneer layer 110, 120, 130 may comprise grains oriented in different directions. The term "grain direction" refers to the direction into which the tree, from which the veneer has been peeled, has grown. The direction is evidenced e.g. by the annual rings visible in the veneers. In the alternative, the grain direction of a veneer layer refers to the average direction of grains, the average being calculated as a mass average. In the alternative, the grain direction of a veneer layer refers to the median direction of grains, the median being calculated on a mass basis such that 50 w% of the grains of the veneer layer form a positive angle relative to a plane defined by a normal of the veneer layer and the grain direction of the veneer layer; and 50 w% of grains of the veneer layer form a negative angle relative to a plane defined by a normal of the veneer layer and the grain direction of the veneer layer.

A problem with processed wood products, such as plywood, is that the surfaces 112, 122 thereof, as a result of the manufacturing processes, e.g. hot-pressing, they have been subjected to, are often poor in e.g. wettability compared to those of freshly cut, polar wood. The surfaces 112, 122 of plywood 100 may have a glazed appearance indicating that they have been inactivated by pressing at high temperatures. Especially during hot-pressing resinous extractives migrate to the surface, adhesives cure, and caul release agents remain on product surfaces and thus inactivate or block the surfaces from being wetted. During hot-pressing plywood 100 will be subjected to heat treatment, whereby the plywood surfaces 112, 122 become more hydrophobic as a result of plasticisation of lignin and/or loss of residual water leading to reorganisation of the lignocellulosic components of the wood. As a result of increased hydrophobicity of plywood the wettability thereof decreases. The poor wettability may then adversely affect the following treatments such as the surface treatment process with fire retardant 300.

It was found out that sanding of the surface 112 of the plywood, on which the fire retardant 300 is to be applied, results in roughness of the surface suitable for good coating of the surface. The surface roughness, as a result of the sanding, of the surface of the plywood has the advantage of enabling even and adequate spreading of the fire retardant chemical over the surface by rollers or spraying.

Referring to Fig. 2a, the method comprises sanding the first surface 112 of the plywood panel 100 in a first sanding direction R1 that forms an angle α1 of at least 30 degrees, at least 45 degrees, or at least 60 degrees with the first grain direction D1. The first sanding direction R1 is also perpendicular to a normal of the first surface 112. In particular, the first surface 112 is sanded using a first sanding surface 322 such that the first sanding surface 322 and the first surface 112 of the plywood panel 100 move relative to each other in a direction that forms an angle of at least 30 degrees, at least 45 degrees, or at least 60 degrees with the first grain direction D1 and belongs to the plane of the first surface 112 of the plywood panel 100. It has been found that sanding in such a direction R1 opens up the grains of the first surface 112. It has been found that the liquid or liquefied fire retardant will impregnate well to a wooden surface sanded in this direction. This happens most likely because the sanding surface breaks the fibres. Correspondingly, if the sanding surface would move only parallel to the grains, some of the grains might be left intact. As indicated in Fig. 2a, preferably the angle α1 between D1 and R1 is about 90 degrees, and R1 is perpendicular to a normal of the first surface 112. The plywood panel 100 may be sanded and treated with fire retardant 300 only from the first side.

Referring to Fig. 2b, an embodiment, wherein also the second surface 122 is treated with fire retardant, comprises sanding the second surface 122 of the plywood panel 100 in a second sanding direction R2 that forms an angle α2 of at least 30 degrees, at least 45 degrees, or at least 60 degrees with the second grain direction D2. The second sanding direction R2 is also perpendicular to a normal of the second surface 122. In particular, the second surface 122 is sanded using a second sanding surface 324 such that the second sanding surface 324 and the second surface 122 of the plywood panel 100 move relative to each other in a direction that forms an angle of at least 30 degrees, at least 45 degrees, or at least 60 degrees with the second grain direction D2 and belongs to the plane of the second surface 122 of the plywood panel 100. As indicated in Fig. 2b, preferably the angle α2 between D2 and R2 is about 90 degrees, and R2 is perpendicular to a normal of the second surface 122.

Sanding may be done e.g. by moving the sanding surface (322, 324) and/or the surface (112, 122) to be sanded back and forth relative to each other. In the alternative, the sanding surface (322, 324) may form a loop (i.e. a band) and may be moved only in one direction.

It was also surprisingly found out that sanding of the surface of the plywood on which the fire retardant chemical is to be applied, has the beneficial effect of enabling penetration of the fire retardant chemical into the voids and cells of the wood material.

In one embodiment of the present invention the sanded surface 112 (optionally also the surface 122) is provided by using at the sanding step before providing the fire retardant on the sanded surface, an abrasive paper having a grit size of P20 - P220, preferably a grit size of P40 - P120, and more preferably a grit size of P40 - P80 in accordance with standard ISO 6344. The use of an abrasive paper with this kind of grit size results in a surface 112 into which the fire retardant 300 easily absorbs. If using a finer grit size, the surface could remain so-called closed for the absorption of the fire retardant chemical and the use of a coarser grit size could result in the fire retardant chemical being non-uniformly distributed with main part of the fire retardant chemical remaining in the valleys of the surface while the so-called tops or peaks would remain un-covered.

In one embodiment of the present invention, at least the first surface 112 of the plywood panel 100 is sanded in an essentially transverse direction in relation to the grain direction of the surface veneer. The term "essentially transverse" has been elaborated above. This has the beneficial effect of most grains on the surface of the plywood and many distinct points of one grain being sanded and so-called opened such that the fire retardant chemical easily absorbs into the grains.

Sanding in said essentially transverse direction offers better wetting properties of wood surface. Wetting is facilitated in the direction of abrasive scratches. The fibres are torn-out when sanded in the essentially transverse direction to the wood grains, while they are mostly stripped when sanded in the parallel direction to the wood grains. Presence of torn-out micro-fibrils, promote a better mechanical anchorage and also offer a greater actual surface available to fire retardant and wood interactions.

In addition to sanding direction, the roughness of the sanding surface(s) has been found to affect how well the liquid or liquefied fire retardant solution 300 becomes impregnated into the surface veneers. In an embodiment, the sanding (i.e. grinding) of the first surface 112 of the plywood panel 100 is performed with a first sanding surface 322 (e.g. a surface of sandpaper) having a grit size within the limits disclosed above (e.g. from P20 to P220 or from P40 to P120 in accordance with standard ISO 6344). The sanding of the second surface 122 of the plywood panel 100 may be performed with a sanding surface, such as the first sanding surface 322 or a second sanding surface 324, having a grit size within the aforementioned limits. This ensures that the sanded surface of the plywood panel is no too smooth before applying the fire retardant, and, at the same time, the fire retardant is impregnated into the surface veneers substantially evenly.

Preferably, the method comprises sanding the first surface 112 with a primary first sanding surface 322 (e.g. a surface of a primary sandpaper) having a grit size of from P40 to P60 and thereafter sanding the first surface 112 with a secondary first sanding surface (e.g. a surface of a secondary sandpaper) having a grit size of from P60 to P120. In a similar manner, the method may comprise sanding the second surface 122 with a primary sanding surface having a grit size of from P40 to P60 and thereafter sanding the second surface 122 with a secondary sanding surface having a grit size of from P60 to P120.

It has also been found that the liquid fire retardant solution will impregnate well to a surface 112 (and optionally 122) when the temperature of the surface is sufficiently high. The method comprises arranging a temperature of the first surface 112 to be at least 15 °C and after said sanding the first surface and arranging the temperature of the first surface, applying liquid fire retardant solution 300 onto the first surface 112. The liquid fire retardant solution 300 is applied onto the first surface 112 when the temperature of the first surface 112 is at least 15 °C. Preferably, the temperature of the first surface is from 30°C to 100°C when the liquid fire retardant solution 300 is applied onto the first surface 112. More preferably, the temperature of the first surface is from 50°C to 95 °C when the liquid fire retardant solution 300 is applied onto the first surface 112. Preferably also the temperature of the liquid fire retardant solution 300, when applied onto the first surface 112 is at least 15 °C, such as at least 20 °C or at least 25°C. Preferably, the temperature of the liquid fire retardant solution 300, when applied onto the first surface 112 is at most 55 °C or at most 50°C.

Increased temperature of wood and optionally also the fire retardant solution might soften the resinous compounds present within the wood structure and reduce the obstruction of liquid flow, and therefore contribute to improved penetration. At higher temperatures, however, risk of exudation of resinous compounds onto the wood surface may occur. This might have opposite effect on the fire retardant penetration.

An embodiment comprises arranging a temperature of the second surface 122 to be at least 15°C and after said sanding the second surface and arranging the temperature of the second surface, applying liquid fire retardant solution 300 onto the second surface 122. The liquid fire retardant solution 300 is applied onto the second surface 122 when the temperature of the second surface 122 is at least 15 °C. Preferably, the temperature of the second surface is from 30 °C to 100 °C when the liquid fire retardant solution 300 is applied onto the second surface 122. More preferably, the temperature of the second surface is from 50 °C to 95 °C when the liquid fire retardant solution 300 is applied onto the second surface 122. Preferably also the temperature of the liquid fire retardant solution 300, when applied onto the second surface 122 is at least 15 °C, such as at least 20 °C or at least 25 °C. Preferably, the temperature of the liquid fire retardant solution 300, when applied onto the second surface 122 is at most 55 °C or at most 50°C.

Referring to Fig. 3a, the fire retardant solution 300 may be e.g. sprayed onto the panel, i.e. onto the first surface 112 thereof. The fire retardant solution 300 may be e.g. sprayed onto the second surface 122. An applicator may comprise a conveyor 410. An applicator may comprise a nozzle 420 for spraying the fire retardant solution 300 onto the panel. In the alternative or in addition, the fire retardant 300 may be applied with a roll coater. In the alternative, the panel 100 may be immersed into the fire retardant solution 300.

Referring to Fig. 3b, after the fire retardant solution 300 has been applied, the panels 100 may be arranged into a stack 200 of plywood panels in order to press (i.e. impregnate) the liquid fire retardant solution 300 into the plywood panel 100. As an example, Fig. 3b shows a stack 200 of five panels 100₁, 100₂, 100₃, 100₄, and 100₅. The pressure of such a stack 200 presses the fire retardant 300 into the panels. However, typically the stack is so low that the pressure of the stack will not deteriorate the mechanical properties of the panels. In an embodiment, the panel is held in the stack 200 for at least 24 hours or at least 48 hours to allow the fire retardant to impregnate into the surface veneers 110, 120.

In case only the first surface 112 of the plywood panel 100 is treated with the fire retardant 300, is it possible to enhance impregnation of the fire retardant 300 into the treated panels 100 before stacking them to a stack. Impregnation of the fire retardant 300 may be enhanced in an elevated temperature. It has been noticed that the temperature influences the properties of fire retardant solution as well as structure of the wood and, therefore, affects the penetration. Therefore, the treated panel may be thermally treated at a temperature of at least 60 °C or at least 80 °C for at least 15 seconds or at least 30 seconds to enhance impregnation of the fire retardant 300 into the treated panels 100.

The treatment temperature may be e.g. at most 120 °C or at most 100 °C in order not to generate high pressures into the treated, moist, wood by boiling. However, even a temperature more than 100 °C can used in connection with a fire retardant comprising water without deteriorating the inner structure of the panel, since with the method, only a little (if any) fire retardant is impregnated into the middle veneer layers (e.g. 130). Thus, the pressure generated by the thermal treatment seems not to affect the mechanical properties of the panel.

Thermal impregnation, as discussed above, can also be used, if the opposite surfaces 112, 122 of the panel 100 are treated subsequently. E.g. it is possible to apply fire retardant first to the first surface 112, thereafter apply the heat treatment to the panel 100 to enhance impregnation, and thereafter apply fire retardant to the second surface 122.

Impregnation needs not be complete. It suffices that the first surface 112 feels dry. In the alternative or in addition if may suffice that the treated surface (112, 122) does not stain objects that contact the treated surface.

It has also been found that a fire retardant 300, such as the liquid fire retardant solution 300, is better impregnated into dry wood than into moist wood. Moreover, it has been found that a fire retardant 300, such as the liquid fire retardant solution 300, is better impregnated into wood that is not too dry. Therefore, in a preferable embodiment, the first 110 veneer layer is substantially dry when the fire retardant 300 is applied. This concerns also the second veneer layer 120, if both surfaces are treated with fire retardant. In an embodiment, when starting to apply the fire retardant 300 onto the first surface 112, the moisture content of the first veneer layer 110 is from 3 % to 14 %, preferably from 8 % to 12 %. In an embodiment, when starting to apply the fire retardant 300 onto the second surface 122, the moisture content of the second veneer layer 120 is from 3 % to 14 %, preferably from 8 % to 12 %. As conventional, the term "moisture content" refers to the mass of water as divided by the dry mass of wood. The dryness affects impregnation in particular, when a liquid fire retardant solution 300 is used.

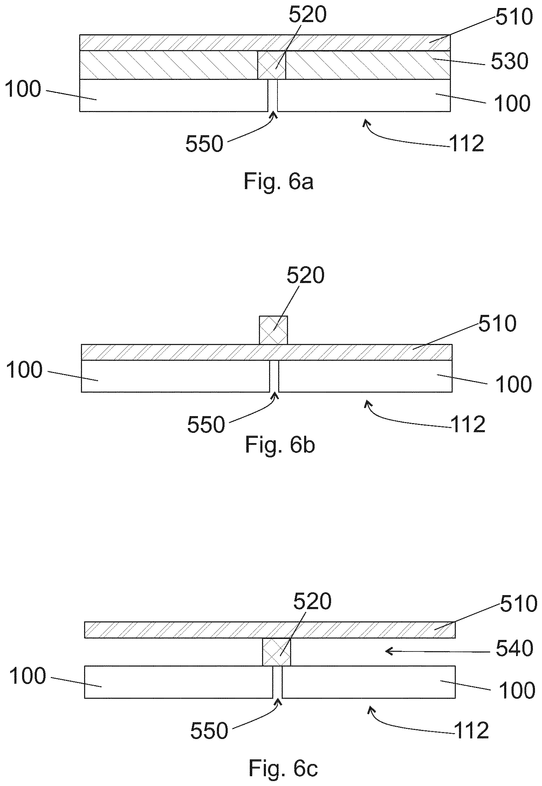

It has been found that in such a way, the first veneer layer 110 and the second veneer layer 120 are impregnated with the fire retardant 300 well, whereby a fire resistant plywood panel 100 is formed. Such a panel is fire resistant according the classification standard EN 13501-1:2007+A1:2009 as indicated by the classes: fire behaviour B, smoke production s1, and flaming droplets d0. It is further noted that this standard refers to other standards, as detailed below. Moreover, preferably the aforementioned fire resistivity classes (B-s1, d0) are achieved in typical mountings described in the standard EN 13823. Such mountings are illustrated in Figs. 6a to 6c.

Preferably the aforementioned fire resistivity classes (B-s1, d0) are achieved in all mountings described in Figs. 6a to 6c. In Figs. 6a to 6c, the plywood panel is fixed mechanically to wooden or metallic frames. The plywood panel is fixed using metallic wood screws. Fig 6a shows a fire resistance test for the plywood panel 100. The panel is mounted to a substrate 510 with a frame 520 or via a substrate 510 to the frame 520. The frame 520 may be a wooden frame or a metal frame. An insulation 530 is arranged to contact the panel 100. The insulation 530 has a fire resistance of class A1 or A2-s1, d0, and a density of at least 30 kg/m³. A gap 550 is left in between two panels 100. Arrangement with both horizontal and vertical gaps are tested. In practice, a large plywood panel is sawn to smaller pieces, in between which the gaps 550 remain. Thus, it is important that the fire resistance of the treated plywood panel is good also after having been sawn to pieces. In particular, the fire resistivity classes B-s1, d0 are applicable in arrangements with both horizontal and vertical gaps.

The frame 520 is left at the location of the gap 550, as indicated in Figs. 6a to 6c. Fig. 6b shows a fire resistance test for the plywood panel 100. The panel is mounted directly to a substrate 510. The substrate 510 has a fire resistance of class A1 or A2-S1, d0, and a density of at least 30 kg/m³. The substrate may be e.g. an insulation, a gypsum board. The substrate is connected to a frame 520. Fig. 6c shows a fire resistance test for the plywood panel 100. The panel is mounted to a substrate 510 with a frame 520. As indicated in the standard EN 13823, the substrate 510 shall meet the requirements of the standard EN 13238. The substrate may be e.g. a gypsum board or concrete. The frame 520 may be a wooden frame or a metal frame. In this way, an air gap 540 is left in between the panel 100 and the substrate 510. A width of the air gap 540 may be e.g. at least 40 mm, or as described in the aforementioned standard.

In practice, the aforementioned classes (B-s1, d0) is the best class applicable to a burnable material, such as wood. Moreover, in an embodiment, the aforementioned fire resistivity classes (B-s1, d0) are achieved in at least a mounting, wherein an air gap is left between the panel 100 and the substrate 510 (Fig. 6c), which is typically the hardest test condition for obtaining these fire resistivity classes.

Moreover, preferably the aforementioned fire resistivity classes (B-s1, d0) are achieved without restrictions regarding the structures surrounding the panel or lack of them, except for a coating of the panel itself.

In such a way, a fire resistant plywood panel 100 is obtained. Such a fire resistant plywood panel 100 comprises the first veneer layer 110 forming the first surface 112 of the plywood panel 100, the second veneer layer 120 forming the second surface 122 (or interface 122) of the plywood panel 100, and adhesive 190 in between the first veneer layer 110 and the second veneer layer 120. The first veneer layer 110 comprises at least 8 g/m² of bound phosphorous. In an embodiment, wherein also the second veneer layer 120 has been treated with a fire retardant, the second veneer layer 120 comprises at least 8 g/m² of bound phosphorous. The phosphorous is bound to a chemical compound, as will be detailed below. Because of the way the plywood panel 100 has been manufactured and/or the phosphorous, the plywood panel 100 is fire resistant according the standard EN 13501-1:2007+A1:2009 as indicated by the classes
- fire behaviour B,
- smoke production s1, and
- flaming droplets d0.

According to the standard EN 13501-1:2007+A1:2009 (see section 11.6), the panel is classified as belonging to the fire behaviour class B, when the parameter FIGRA ≤ 120W/s and the parameter THR₆₀₀ₛ ≤ 7.5 MJ as defined in the standard EN13823:2002 and when a flame tip does not reach 150 mm above a flame application point within 60 s as detailed in the standard in view of the standard EN ISO 11925-2:2002. The aforementioned parameter FIGRA refers to fire growth rate, the parameter THR to total heat release. The parameter THR₆₀₀ₛ refers to total heat release within 600s (section 9.1 of the standard EN13823:2002).

According to the standard EN 13501-1:2007+A1:2009 (see section 11.9.2), the panel is classified as having a smoke production s1, when the parameter SMOGRA ≤ 30 m²/s² and TSP₆₀₀ₛ ≤ 50 m² as defined in the standard EN13823:2002. The aforementioned parameter SMOGRA refers to smoke growth rate and the parameter TSP refers to total smoke production. The parameter TSP₆₀₀ₛ refers to total smoke production within 600s (section 9.2 of the standard EN13823:2002).

According to the standard EN 13501-1:2007+A1:2009 (see section 11.10.1), the panels is classified as having flaming droplets d0, when no flaming droplets or particles as described in the standard EN13823:2002 (section 9.3) are produced within 600 s.

The aforementioned classification is valid for a constructional product except flooring, i.e. a plywood panel not intended for use as a flooring element. For flooring elements somewhat different criteria applies. However, it has been observed that the panel 100 is, if tested as a flooring element, fire resistant according the standard EN 13501-1:2007+A1:2009 as indicated by the classes
- fire behaviour B_{fl},
- smoke production s1.

According to EN 13501-1:2007+A1:2009 (section 12.6), to achieve the class B_{fl}, the critical heat flux ≥ 8,0 kW/m² according to standard EN ISO 9239-1. Moreover, a flame tip does not reach 150 mm above a flame application point within 20 s as defined in the standard EN ISO 11925-2:2002.

According to EN 13501-1:2007+A1:2009 (section 12.9.2), to achieve the class s1, a parameter Smoke is ≤ 750 %×min according to standard EN ISO 9239-1.

To keep the costs of panel, in particular the additional cost for using the fire retardant 300, low, in an embodiment, the first veneer layer 110 comprises at most 30 g/m², such as at most 25 g/m² or at most 20 g/m² of bound phosphorous. In an embodiment, the second veneer layer 120 comprises at most 30 g/m², at most 25 g/m², or at most 20 g/m², of bound phosphorous. In addition, the thickness of the surface veneers 110 may be selected in such a way that the first veneer 110 comprises from 2 kg/m³ to 15 kg/m³, such as from 3 kg/m³ to 12 kg/m³, bound phosphorous. Moreover, the thickness of the second veneer 120 may be selected such that it comprises from 2 kg/m³ to 15 kg/m³, such as from 3 kg/m³ to 12 kg/m³, bound phosphorous.

The amount of phosphorous can be measured e.g. by taking a sample of the veneer layer, burning it to ash, and analyzing the content of the ash. Such a method is commonly referred to as a SEM-EDS, an acronym for scanning electron microscopy (SEM) - energy dispersive spectroscopy (EDS). After the SEM-EDS analysis is carried out, one can determine the ratio of elements that are as heavy or heavier than sodium. For example, in an embodiment, when such analyzed, the content of phosphorous was at least 40 wt% (one significant digit) of such elements of the ash that had an atomic mass at least equal to the atomic mass of sodium (Na). Such content was measured from the ash using scanning electron microscopy (SEM) and energy dispersive spectroscopy (EDS).

The plywood panel 100 comprises, on the first surface 112, traces indicative of sanding the first surface 112 of the plywood panel 100 in a first sanding direction R1 that forms an angle of at least 30 degrees, at least 45 degrees, or at least 60 degrees with the grain direction D1 of the first veneer layer 110. In an embodiment, the plywood panel 100 comprises, on the second surface 122, traces indicative of sanding the second surface 122 of the plywood panel 100 in a second sanding direction R2 that forms an angle of at least 30 degrees, at least 45 degrees, or at least 60 degrees with the grain direction D2 of the second veneer layer 120. The traces may also be indicative of a sanding the surfaces of the panel with a sanding surface having a proper grit, as detailed above. However, if the surface of the panel is covered by a coating 195 or coating 195, 196 (see Fig. 195) the coating(s) may cover the traces of sanding, whereby the traces and the sanding direction is not necessarily visible from the panel.

Because of the adhesive 190, the liquid fire retardant solution 300 does not significantly propagate from a surface veneer layer (110, 120) to another veneer layer (130, 140, 150). As indicated above, this helps to concentrate the fire retardant 300 to such locations where it is needed. In an embodiment, the plywood panel 100 comprises a third veneer layer 130 arranged in between the first veneer layer 110 and the second veneer layer 120. Moreover, the third veneer layer 130 is free from added phosphorous (bound or free) or comprises less phosphorous than the surface veneer layer 110 or 120. In an embodiment, the content c130 of phosphorous of the third veneer layer 130 as measured in wt%, is less than the content c110 of phosphorous of the first veneer layer 110 as measured in wt%. In an embodiment, the ratio c130/c110 of these contents is at most 0.5, at most 0.25, or at most 0.1. The contents c130 and c110 may be measured from the ash, as discussed above, and in proportion of only of such elements of the ash that have an atomic mass at least equal to the atomic mass of sodium (Na).

Moreover, even if some fire retardant 300 may propagate into the middle layers e.g. when applied by immersion, because of low pressure, the fire retardant becomes applied only near the boundaries of the panel. In an embodiment, a central area of the third veneer layer 130 is free from added phosphorous (bound or free) or comprises less phosphorous than the surface veneer layer 110 or 120. Also untreated wood, e.g. spruce, comprises a small amount of phosphorous. For example the aforementioned ratio c130/c110 may apply, when the sample of the third veneer layer is taken from a central area of the third veneer layer 130. The central area of the third veneer layer 130 refers to such parts of the third veneer layer 130 that are located at least 5 cm or at least 25 mm away from such edges of the plywood panel that a perpendicular to the surfaces 112, 122 or interfaces 112, 122.

The fact that the high level of fire resistance is achieved without high-pressure application of the fire retardant has the further effect, that the edges of the panel are not responsible for the fire resistance. As indicated above, only at most a reasonable small boundary area of a middle veneer is, in an embodiment, impregnated with the fire retardant. Therefore, the panel can be sawn in a longitudinal and/or a transversal direction/directions without losing the fire resistivity properties. For example, the edges of the treated panel may be sawn, and the panel would still be considered fire resistant to the same level. This has many benefits in constructional applications, since large panels that have been treated to be fire resistant can be sawn to proper size later on.

In an embodiment, the first veneer layer 110 comprises softwood, such as spruce or pine. In an embodiment, the second veneer layer 120 comprises softwood, such as spruce or pine. This has the effect that less fire retardant 300 is needed to achieve a needed fire resistance level. Thus, preferably, at least the first veneer layer 110 comprises softwood. In an embodiment, also the second veneer layer 120 comprises softwood. Preferably both these layers (110, 120) comprise softwood, such as spruce or pine. In an embodiment, all the veneer layers of the plywood panel 100 are made from the same wood species. What has been said about the plywood panel relates both to the panel that is treated in the method and to the panel that has been treated as indicated above. The invention has been found to work particularly well, when the first veneer layer 110 comprises wood from the species Picea Abies or Pinus Sylvestris. In addition, the second veneer layer 120 may comprise wood from the species Picea Abies or Pinus Sylvestris.

In an embodiment, at least one of the thickness tsv1 (see Fig. 1b) of the first veneer layer 110 and the thickness tsv2 of the second veneer layer 120 is from 1.5 mm to 3.2 mm. It has been found that this thickness is, on one hand sufficiently high for receiving a sufficient amount of fire retardant 300. On the other hand, it has been found that this thickness is sufficiently low in order to have the concentration of fire retardant in a proper level without using excessive amounts of fire retardant. In an embodiment, the thickness tsv1 of the first veneer layer 110 is equal to the thickness of the second veneer layer 120. In an embodiment, both the thickness tsv1 of the first veneer layer 110 and the thickness tsv2 of the second veneer layer 120 are from 1.5 mm to 3.2 mm.

Referring to Fig. 1b, the thickness tbv of a body veneer layer (i.e. veneer layer in between the first and second layers 110, 120) may be different from the aforementioned thicknesses tsv1 and tsv2. For example, the thickness tbv of a body veneer layer may be greater than the thickness tsv1, tsv2 of a surface veneer layer (110, 120). In an embodiment, the panel comprises a third veneer layer 130 that is arranged, in the direction of the panel in between the first veneer layer 110 and the second veneer layer, wherein a thickness of the third veneer layer is from 1.5 mm to 4.0 mm. In an embodiment, the panel comprises at least a third veneer layer 130; and a thickness of each such veneer layer that is arranged in between the first veneer layer 110 and the second veneer layer is from 1.5 mm to 4.0 mm.

However, as indicated in Fig. 1a, all the veneer layers of a plywood panel 100 may be equally thick or substantially equally thick, at least before sanding.

Sanding the surface veneer layers 110, 120 typically reduces their thickness. This is beneficial from the point of view of fire resistance of the panel. Since the surface veneer layers may be thin, e.g. due to the sanding, the concentration of fire retardant in the surface layers will be increased. In an embodiment of the method, the fire retardant is applied to such a panel 100 that comprises a third veneer layer 130 in between first veneer layer 110 and the second veneer layer 120; the third veneer layer 130 having a thickness tbv and the first veneer layer 110 having a thickness tsv1, wherein the thickness tbv of the third veneer layer 130 is greater than the thickness tsv1 of the first veneer layer 110. In an embodiment of the method, the fire retardant is applied to such a panel 100 that comprises a third veneer layer 130 in between first veneer layer 110 and the second veneer layer 120; the third veneer layer 130 having a thickness tbv and the second veneer layer 120 having a thickness tsv2, wherein the thickness tbv of the third veneer layer 130 is greater than the thickness tsv2 of the second veneer layer 120. This may be the case, for example when all the veneer layers are, before sanding, equally thick, and the thickness of the surface veneer layers 110, 120 is reduced by sanding. However, the treatment by fire retardant may make the surface veneer layer 110, 120 somewhat thicker.

In an embodiment, the adhesive 190 of the plywood panel 100 comprises at least one of polymerized phenol-formaldehyde resin and polymerized lignin-phenol-formaldehyde resin. This has two effects. First, polymerized phenol-formaldehyde and lignin-phenol-formaldehyde resins are at least to some extent liquid-proof (and waterproof), whereby the adhesive 190 prevents the fire retardant 300 from diffusing from a surface layer (110, 120) into a body veneer layer (130, 140, 150, 160). This helps to keep the content of fire retardant in the surface veneer layers 110, 120 high. Second, polymerized phenol-formaldehyde and lignin-phenol-formaldehyde resins are is reasonably heat resistant and conduct heat poorly. Therefore, the adhesive 190 also protects the body veneer layers (130, 140, 150, 160) in case of fire.

Referring to Figs. 4d and 4c, a veneer layer 130 may comprise multiple veneers 131, 132, 133. The veneers 131, 132, 133 of the layer are preferably arranged so that their grain directions are parallel. Fig. 4d shows an example of a veneer 131. Preferably, the first veneer layer 110, which is a surface veneer layer, comprises only one veneer. This improves the visual appearance of a first side of the plywood panel 100. Preferably, the second veneer layer 120, which is another surface veneer layer, comprises only one veneer. This improves the visual appearance of a second side of the plywood panel 100. Moreover, having a surface veneer layer 110, 120 formed only from one veneer improves the impregnation of the fire retardant 300, since, in that case, both the surface veneer layers 110, 120 are free from adhesive. Adhesive could hinder the impregnation of the fire retardant 300.

Referring to Fig. 4b, a plywood panel may be cross laminated. This means that a veneer layer has a grain direction that is substantially perpendicular to the grain direction(s) of neighbouring layer(s). However, the internal structure of a plywood panel 100 may be different. For example, the grain directions of two or more neighbouring layers may be parallel. Typically, a plywood panel with an odd number (e.g. 3, 5, 7, 9, 11, 13, or 15) veneer layers are cross laminated throughout. Typically, a plywood panel with an even number (e.g. 4, 6, 8, 10, 12, or 14) veneer layers is cross laminated except for the two middle layers, which have grain directions parallel to each other. Within such structures, the grain direction DG1 of the first veneer layer 110 is parallel to the grain direction DG2 of the second veneer layer 120. A panel, in which the grain direction DG1 of the first veneer layer 110 is parallel to the grain direction DG2 of the second veneer layer 120 is beneficial for the method described above, since then also the first sanding direction R1 can be parallel to the second sanding direction R2. This simplifies the sanding process.

The internal structure affects the mechanical strength of the plywood panel. However, unlike in some other methods, when the liquid fire retardant solution 300 is applied as indicated above, the internal structure of the plywood panel does not break during the fire resistive treatment, whereby the mechanical properties of the panel remain substantially unaltered.

If a panel would be treated with fire retardant under pressure, e.g. by pressure impregnation, this would affect the panel in at least the following:
- the fire retardant would be impregnated also from the sides of the panel, whereby also such layers that are arranges in between the surface veneer layers of the panel would be impregnated with the fire retardant, at least to some extent and some distance from a boundary of the panel.
- the internal structure of the veneer layers would change as evidenced e.g. by larger cracks of the veneer layers.
- the structure of the fibres of the wood material of the veneer layers. If the fire retardant would have been applied under pressure, some of the fibres of the wood material would be permanently dented. This would reduce in particular the bending stiffness of the wood material.

Thus, an embodiment the panel comprises only such wood that has not been pressure impregnated with a fire retardant. The panel comprises only such wood that has not been pressure impregnated with a fire retardant, wherein the pressure of the pressure impregnation would have been at least 2 bar(a).

In addition, if the middle layers were impregnated with fire retardant, and the panel was dried in an oven later on, this would affect the panel in at least the following:
- the internal structure of the veneer layers would change as evidenced e.g. by larger cracks of the veneer layers.
- the structure of the fibres of the wood material of the veneer layers. If the fire retardant would have been applied under pressure, some of the fibres of the wood material would be permanently dented.

These would reduce in particular the bending stiffness of the wood material. Typically, the temperature used in such drying is in the range from 110 °C to 180 °C. This may cause the fire retardant that has been impregnated into the middle veneer layers to boil and in this way deteriorate the panel.

Heat-assisted drying may be needed also in cases, where the panel has not been treated by a pressure of at most 0.5 bar(a), i.e. a poor or good vacuum. The panel comprises only such wood that has not been treated by a pressure that goes below 0.5 bar(a).

The plywood panel may comprise e.g. from 3 to 25 veneer layers. The thickness tp of the plywood panel may be from 4 mm to 75 mm, preferably from 9 mm to 21 mm, more preferably from 15 mm to 21 mm. In a preferred embodiment, the plywood panel comprises at least five veneer layers and has a thickness tp of at least 15 mm. Such a panel is typically sufficiently strong for use as a building material.

The specific mass (i.e. mass divided by area) of such a plywood panel may be from 6.5 kg/m² to 10 kg/m² (two significant digits). The specific mass depends e.g. on the thickness of the panel and on the thickness of the veneer, which affects the amount of adhesive used. The density of the panel may be e.g. from 400 kg/m³ to 550 kg/m³. In constructional applications, more dense panels are hard to handle. This is another reason for using softwood and only a small amount of fire retardant.

In an embodiment, the fire retardant 300 comprises bound phosphorus. The term bound phosphorous refers to phosphorous as bound in a chemical compound. In an embodiment, the fire retardant 300 comprises from 2 wt% to 30 wt%, such as from 5 wt% to 15 wt%, bound phosphorus as measured according to the standard SFS-EN ISO 11885 (referring to the latest version available in May 2017). Preferably, the fire retardant (300) is a liquid fire retardant solution (300).

In an embodiment, the fire retardant 300 comprises at most 1 ppm, or is free from, each one of a heavy metal, boron, and a halogenated compound. Correspondingly, in an embodiment of a treated plywood panel, the first veneer layer comprises at most 1 ppm, or is free from, added heavy metal, boron, and a halogenated compound.

In an embodiment, the application of the fire retardant 300 does not affect an emission class of the plywood panel. The emission class describes the amount of emissions of the plywood panel in use. Emission classes typically vary from one country to another. Herein, for the determination of the emission class, the document "M1 Protocol for Chemical and Sensory Testing of Building Materials", as published by Rakennustietosäätiö RTS, i.e. The Building Information Foundation RTS, (version dated 22.1.2015) is referred to. An embodiment comprises using such an amount of such a fire retardant 300 that the treated plywood panel has the same emission class as defined in the document "M1 Protocol for Chemical and Sensory Testing of Building Materials" as a similar untreated plywood panel. As for more specific meaning of the term "similar", see below.

In an embodiment, the fire retardant 300 is a liquid fire retardant solution. In an embodiment, the fire retardant 300 is an aqueous liquid solution of the fire retardant. In an embodiment, the liquid fire retardant solution 300 comprises an acid or acid salt compound comprising phosphorus.

The liquid fire retardant solution 300 comprises 1-hydroxyethylidene-1,1-diphosphonic acid (HEDP). HEDP has the chemical formula CH₃C(OH)[PO(OH)₂]₂ and the following structure

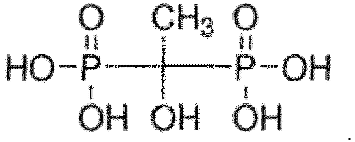

It is also has a Chemical Abstracts Service (CAS) number 2809-21-4. HEDP is preferable, because it is water soluble, whereby the aqueous solution can be reasonably easily be impregnated into the surface veneers 110, 120. In an embodiment, the liquid fire retardant solution 300 comprises from 10 wt-% to 60 wt-% HEDP, such as from 20 wt-% to 40 wt-% HEDP. Moreover, as calculated from the chemical formula, pure HEDP comprises 30 wt% phosphorous (i.e. bound phosphorous). In an embodiment, the fire retardant 300 is an aqueous liquid solution comprising from 10 wt-% to 60 wt-% HEDP, such as from 20 wt-% to 40 wt-% HEDP.

Preferably, the liquid fire retardant solution 300 further comprises at least one of calcium, iron, potassium, sodium, sulphur, copper, and zinc. Materials that comprise at least one of these elements may be used to improve the capability of the fire retardant to impregnate into veneers. In addition, these materials help to keep the fire retardant within the veneer even in humid conditions. In an embodiment, the liquid fire retardant solution 300 comprises at least 4 ppm of at least one of calcium, iron, potassium, sodium, sulphur, copper, and zinc, as measured according to the standard SFS-EN ISO 11885. In an embodiment, the liquid fire retardant solution 300 comprises at least 4 ppm of each one of calcium, iron, potassium, sodium, sulphur, and zinc, as measured according to the standard SFS-EN ISO 11885. In an embodiment, the liquid fire retardant solution 300 comprises at least 10 wt-% or at least 20 wt-% of HEDP, and at least 4 ppm of one of calcium, iron, potassium, sodium, sulphur, copper, and zinc as measured according to SFS-EN ISO 11885. In an embodiment, the liquid fire retardant solution 300 comprises at least 10 wt-% or at least 20 wt-% of HEDP, and at least 4 ppm of each one of calcium, iron, potassium, sodium, sulphur, and zinc as measured according to SFS-EN ISO 11885.

In an embodiment, such an amount of the fire retardant 300 is applied onto the first surface 112 that at least 8 g/m² or at least 9 g/m² of bound phosphorous is applied onto the first surface 112. In an embodiment, such an amount of the fire retardant 300 is applied onto the second surface 122 that at least 8 g/m² or at least 9 g/m² of bound phosphorous is applied onto the second surface 122.

Such an amount is preferably obtained using a liquid fire retardant solution 300 that comprises from 20 wt-% to 40 wt-% 1-hydroxyethylidene-1,1-diphosphonic acid (HEDP). In such a case, at least 150 g/m² or at least 180 g/m² of the a liquid fire retardant solution 300 is applied onto the first surface 112. In an embodiment at least 150 g/m² or at least 180 g/m² of the a liquid fire retardant solution 300 is applied also onto the second surface 122. However, it has been observed that a sufficient fire resistance is obtained by this amount. In order to keep the costs reasonable, preferably at most 250 g/m² of such liquid fire retardant solution 300 is applied onto the surfaces. Even more preferably, at least 180 g/m² and less than 200 g/m² of such solution is applied onto at least the first one (112) of the surfaces (112, 122).

Depending on the fire retardant 300, the excellent fire performance of the virgin fire resistant plywood panel may degrade with time, especially in outdoor conditions. This is due to the fact that the chemicals used to generate the fire resistant properties may be water-soluble compounds and hygroscopic. Thus, when exposed to high humidity, fire resistant plywood may get a high moisture content. High moisture content may lead to migration of the fire retardant chemicals within the plywood and salt crystallisation on the product surface. The fire retardant chemicals may ultimately be leached out of the plywood. Even at moderate outdoor humidity and indoors, the fire performance may deteriorate because the fire retardant chemicals migrate away from the surface towards lower concentration regions deeper inside the material thus increasing flammability of the product.

Using a liquid solution comprising HEDP as the fire retardant 300 has the further beneficial effect that the fire retardant is not very hygroscopic. As indicated above, hygroscopic fire retardant may, in the long run, because of the migration of fire retardant chemicals, form salt on the product surface and in this way weaken the fire resistance of the panel. In contrast, when the fire retardant 300 is a liquid comprising HEDP, such problems are avoided, at least to great extent.

Hygroscopicity of the fire retardant 300 can be tested by applying the treated plywood panel to a controlled environment for a specified time and observing the weight increase of the panel. Such test is detailed in a document "Nodrtest Method, build 504, Approved 2003-12". The test conditions 90 ± 3% at 27 ± 2°C are used after conditioning in 50 ± 3% RH at 23 ± 2°C (see section 6.2). At the same time, formation of salts onto a surface of the panel, or dripping of water from the surfaces of the panel (i.e. lack thereof), must be observed.

Using the results of this test, the panel can be classified as being suitably for indoor use, as specified in the document "NT Method: DURABILITY OF REACTION TO FIRE - PERFORMANCE CLASSES OF FIRE-RETARDANT TREATED WOOD-BASED PRODUCTS IN INTERIOR AND EXTERIOR END USE APPLICATIONS; NT FIRE 054, Approved 2006-06". The panel can be classified as being suitably for indoor use, when a weight increase in the aforementioned test is less than 30 %. Weight increase is due to water absorption to the panel.

It has been observed that the fire resistant panels, having been treated as described above, have the property of being "DFR Class INT" panels according to NT Method: DURABILITY OF REACTION TO FIRE - PERFORMANCE CLASSES OF FIRE-RETARDANT TREATED WOOD-BASED PRODUCTS IN INTERIOR AND EXTERIOR END USE APPLICATIONS; NT FIRE 054, Approved 2006-06. As a consequence, the weight increase in the aforementioned test "Nodrtest Method, build 504, Approved 2003-12" is less than 30 %. In addition, after or during the test, there is no visible salt at surface and no exudation of liquid. Furthermore, the panel is initially fire resistant according the standard EN 13501-1:2007+A1:2009
- as indicated by the classes
   ∘ fire behaviour B,
   ∘ smoke production s1, and
   ∘ flaming droplets d0, or
- as indicated by the classes
   ∘ fire behavior B_{fl} and
   ∘ smoke production s1.

As motivated above, too high a pressure can break the internal structure of the panel 100 such that its strength becomes reduced. This is not desired for structural panels. Therefore, in an embodiment, the liquid fire retardant solution 300 is applied onto the surfaces (112, 122) such that a pressure by which the fire retardant solution 300 is applied does not exceed 2 bar(a) or 10 bar(a). As indicated above, in an embodiment, the liquid fire retardant solution 300 is applied onto the surfaces (112, 122) such that a pressure by which the fire retardant solution 300 is applied does not go below 0.5 bar(a). However, in a stack 200 a small pressure improves the impregnation without breaking the internal structure of the panel.

It has been found that in addition to the liquid fire retardant solution, no other means is necessary for sufficient fire resistance. Therefore, preferably, the panel 100 does not comprise an aluminium foil. For example, the panel may be free from aluminium or comprise less than 100 ppm aluminium. Preferably, the panel 100 does not comprise a synthetic fibrous layer, such as a glass fibre layer. Preferably, the panel 100 only comprises the veneer layers, of which at least the first veneer 110 (and preferably also the second veneer 120), has been impregnated with the fire retardant, as discussed above, and adhesive in between the veneer layers. Naturally, a user of the panel may coat such a panel, e.g. by painting. With reference to Fig. 5a, a coated plywood panel 100 comprises, in addition to the coating 195 and/or the coating 196, a first veneer layer 110, such that all veneer layers of the plywood panel 100 are left on the same side of a first interface 112 between the first veneer 110 and a first coating 195, and a second veneer layer 120, such that all veneer layers of the plywood panel 100 are left on the same side of a second interface 122 between the second veneer 120 and a second coating 196. Naturally, it is possible that the panel is coated only from one side, e.g. the first side, as indicated in fig 5b. In such a case all veneer layers of the plywood panel 100 are left on the same side of a first interface 112 between the first veneer 110 and a first coating 195, and a second surface 122 of the panel, the second surface 122 being comprised by the second veneer 120.

When a surface (112, 122) of the panel has been coated (e.g. painted), the surface of the surface veneer layer (110, 120) does not form a surface of the panel. However, in such a case the panel comprises a first veneer layer 110, such that all veneer layers of the plywood panel 100 are left on the same side of a first interface 112 between the first veneer layer 110 and the coating 195. Moreover, the panel comprises a second veneer layer 120, such that all veneer layers of the plywood panel 100 are left on the same side of a second interface 122 between the second veneer layer 120 and a coating 196. Moreover, the traces of sanding may not be visible from a coated panel.

As an example, a 15 mm thick plywood panel having five cross laminated veneer layers, each made of spruce, was treated to be fire resistant as discussed above, and the strength was measured according to the standard EN 310 (February 1993). The standard describes how to measure a modulus of elasticity E (section 7.1.1) and a bending strength fₘ (section 7.2.1) in a longitudinal and transverse directions (section 6.6). In the longitudinal direction measurements, the plywood panel is placed in between two supports (see Fig. 1 of the standard EN 310) such that the grain direction of surface veneer layers 110, 120 is directed from one support to the other. In the transverse direction measurements, the plywood panel is placed in between two supports (see Fig. 1 of the standard EN 310) such that the grain direction of surface veneer layers 110, 120 is parallel to the supports.

The panel had a first bending strength f_{m∥} from 37 N/mm² to 52 N/mm² as measured in a longitudinal test of the standard EN310. The panel had a second bending strength fₘ⊥ from 19 N/mm² to 28 N/mm², as measured in a transverse test of the standard EN310. The panel had a first modulus of elasticity E_{∥} from 4600 N/mm² to 6000 N/mm² as measured in a longitudinal test of the standard EN310. The panel had a second modulus of elasticity E⊥ from 1800 N/mm² to 2700 N/mm², as measured in a transverse test of the standard EN310.

As another example, a 18 mm thick plywood panel having seven cross laminated veneer layers made of spruce was treated to be fire resistant as discussed above, and the strength was measured according to the standard EN 310. Such a panel had a first bending strength f_{m∥} from 37 N/mm² to 53 N/mm² and a second bending strength fₘ⊥ from 27 N/mm² to 44 N/mm², as measured and defined in the standard EN 310, longitudinal and transversal tests, respectively. In addition the panel had a first modulus of elasticity E_{∥} from 4800 N/mm² to 6800 N/mm² and a second modulus of elasticity E⊥ from 2800 N/mm² to 4300 N/mm², as measured and defined in the standard EN 310, longitudinal and transversal tests, respectively.

An embodiment of a plywood panel comprises from five to nine veneer layers, each made from spruce, and the thickness of the panel is from 15 mm to 21 mm, such as from 15 to 19 mm. Moreover, the panel has a first bending strength f_{m∥} at least 37 N/mm², a second bending strength fₘ⊥ at least 19 N/mm², a first modulus of elasticity E_{∥} at least 4600 N/mm², and a second modulus of elasticity E⊥ at least 1800 N/mm², as measured and defined in the standard EN 310. Herein "first" refers to a longitudinal test and "second" to a transverse test of the standard EN 310.

Moreover, as indicated above, the application of fire retardant does not significantly affect the mechanical properties of the panel. Therefore, in an embodiment of the method, the panel has, before the application of the fire retardant, a primary first modulus of elasticity E_{∥1} and a primary second modulus of elasticity E⊥₁. The term "primary" refers to the properties before the application of the fire retardant. Moreover, the panel has, after the application of the fire retardant, a secondary first modulus of elasticity E_{∥2} and a secondary second modulus of elasticity E⊥₂. The term "secondary" refers to the properties after the application of the fire retardant. As for the terms first and second, these refer to the orientation of the panel in the test, as discussed above. Furthermore, the ratio of the primary first modulus of elasticity E_{∥1} to the secondary first modulus of elasticity E_{∥2}, i.e. E_{∥1}/E_{∥2}, is from 0.75 to 1.25; preferably from 0.9 to 1.2 or from 0.9 to 1.1. In addition or alternatively, the ratio of the primary second modulus of elasticity E⊥₁ to the secondary second modulus of elasticity E⊥₂, i.e. E⊥₁/E⊥₂, is from 0.75 to 1.25; preferably from 0.9 to 1.2 or from 0.9 to 1.1.

The elastic moduli of a panel can be tested without breaking the panel. However, if the bending strength is also tested, the test is destructive. To test the properties of a single panel before the treatment with the fire retardant, it is possible to divide a panel to a first part and a second part, and treat only the second part with the fire retardant. The mechanical properties of the untreated first part can be measured according to the standard EN 310, resulting in values for a primary first modulus of elasticity E_{∥1}, a primary second modulus of elasticity E⊥₁, a primary first bending strength f_{m∥1}, and a primary second bending strength fₘ⊥₁. The mechanical properties of the treated second part can be measured according to the standard EN 310, resulting in values for a secondary first modulus of elasticity E_{∥2}, a secondary second modulus of elasticity E⊥₂, a secondary first bending strength f_{m∥2}, and a secondary second bending strength fₘ⊥₂. Preferably also the values for the bending strength remain unchanged. Thus, in an embedment,
- a ratio f_{m∥1}/f_{m∥2} of the primary first bending strength (f_{m∥1}) to the secondary first bending strength (f_{m∥2}) is from 0.75 to 1.25 and/or
- a ratio fₘ⊥₁/fₘ⊥₂ of the primary second bending strength (fₘ⊥₁) to the secondary second bending strength (fₘ⊥₂) is from 0.75 to 1.25.

In the alternative, it is possible to receive an untreated similar plywood panel, and measure the first modulus of elasticity E_{∥1}, a primary second modulus of elasticity E⊥₁, a primary first bending strength f_{m∥1}, and a primary second bending strength fₘ⊥₁ according to the standard EN 310 from the untreated similar panel. The mechanical properties of the treated panel can be measured according to the standard EN 310, resulting in values for the secondary first modulus of elasticity E_{∥2}, the secondary second modulus of elasticity E⊥₂, the secondary first bending strength f_{m∥2}, and the secondary second bending strength fₘ⊥₂. As for more specific meaning of the term "similar", see below. The four ratios as discussed above apply in an embodiment. More specifically:
- E_{∥1}/E_{∥2} is from 0.75 to 1.25; preferably from 0.9 to 1.2 or from 0.9 to 1.1,
- E⊥₁/E⊥₂ is from 0.75 to 1.25; preferably from 0.9 to 1.2 or from 0.9 to 1.1,
- f_{m∥1}/f_{m∥2} is from 0.75 to 1.25; preferably from 0.9 to 1.2 or from 0.9 to 1.1, and
- fₘ⊥₁/fₘ⊥₂ is from 0.75 to 1.25; preferably from 0.9 to 1.2 or from 0.9 to 1.1.

As indicated above, the application of fire retardant does not significantly affect the mechanical properties of the panel. This applies in particular for the corresponding average values as obtained from a set of treated panels and a set of similar untreated panels. Therefore, in a test regarding panels, a first set of sixty panel samples has, before the application of the fire retardant, an average primary first modulus of elasticity <E∥₁> and a second set of sixty panel samples has, before the application of the fire retardant average primary second modulus of elasticity <E⊥₁>. Herein the average is calculated by measuring the moduli for each of the sixty panel samples.

Herein the term "panel sample" refers to samples obtained by sawing a first set of ten un-treated similar plywood panels 100 to twelve panel samples each. Each one of the ten panels are similar to each other. Each of the ten panels of the first set is sawn such that six panel samples are suitable for a longitudinal test and other six panel samples are suitable for a transversal test according to EN 310. In this way, first set of sixty panel samples (which are untreated) are suitable for a longitudinal test and second set of sixty panel samples (which are untreated) are suitable for a transversal test according to the standard EN 310. The test may be destructive, whereby these panel samples are destroyed in the test. However, in addition to the moduli of elasticity, the bending strength can be measured in the same test.

The term "similar" in connection with plywood panels means panels having the same number of veneer layers, same thickness of panel, same adhesive in between the veneer layers, and the veneer layers are made from same wood species. Moreover, the thicknesses of individual veneer layers are the same, and the water resistant coating 196 (if any) is made of same material with the same thickness. This applies in particular, when the panels are obtained from the same production line as subsequent plywood panels. In particular, a plywood panel having been treated with the aforementioned method is similar to the plywood panel received and treated by the method before the treatment.

The fire resistant treatment is applied to a second set of ten similar panels. These panels are similar to each other and to the panels of the first set of ten un-treated similar plywood panels. Each of the ten panels of the second set of ten similar panels is sawn such that six panel samples are suitable for a longitudinal test and other six panel samples are suitable for a transversal test. In this way, a third set of sixty panel samples (which are treated) are suitable for a longitudinal test and a fourth set of sixty panel samples (which are treated) are suitable for a transversal test according to the standard EN 310.

The panel samples of the third set of sixty panel samples have, after the application of the fire retardant, an average secondary first modulus of elasticity <E_{∥2}>; and the panel samples of the fourth set of sixty panel samples have, after the application of the fire retardant, an average secondary second modulus of elasticity <E⊥₂>. Such an embodiment comprises receiving, in total, two-hundred and forty similar plywood panel samples, and treating hundred and twenty of them as disclosed above. In other words, twenty similar panels are received, ten of them are treated, and each one of the twenty panels are sawn to twelve panel samples as indicated above.

In an embodiment, for the third and the first sets of sixty panel samples having the thickness of 15 mm, the average elastic moduli were <E_{∥2}> and <E_{∥1}>, respectively; and the ratio <E_{∥2}>/<E_{∥1}> was 0.95. For the fourth and the second sets of sixty panel samples having the thickness of 15 mm, the average elastic moduli were <E⊥₂> and <E⊥₁>, respectively; and the ratio <E⊥₂>/<E⊥₁> was 0.88.

In an embodiment, for the third and the first sets of sixty panel samples having the thickness of 18 mm, the average elastic moduli were <E_{∥2}> and <E_{∥}1>, respectively; and the ratio <E_{∥2}>/<E_{∥1}> was 0.98. Moreover, and for the fourth and the second sets of sixty panel samples having the thickness of 18 mm, average elastic moduli were <E⊥₂> and <E⊥₁>, respectively; and the ratio <E⊥₂>/<E⊥₁> was 1.04.

Similar test can be made concerning the first and second bending strengths f_{m∥} and fₘ⊥, respectively. As indicated above, these values can be measured in the same test as the corresponding elastic modulus E_{∥} and E⊥, respectively. Thus:
- an average primary first bending strength <f_{m∥1}>, i.e. an average of the bending strengths measured in the grain direction of the surface veneer layer for the untreated panel samples, is measured for the first set of sixty panel samples as discussed above,
- an average secondary first bending strength <f_{m∥2}>, i.e. an average of the bending strengths measured in the grain direction of the surface veneer layer for the treated panels, is measured for the third set of sixty panel samples as discussed above,
- an average primary second bending strength <fₘ⊥₁>, i.e. an average of the bending strengths measured perpendicular to the grain direction of the surface veneer layer for the untreated panels, is measured for the second set of sixty panel samples as discussed above, and
- an average secondary second bending strength <fₘ⊥₂>, i.e. an average of the bending strengths measured perpendicular to the grain direction of the surface veneer layer for the treated panels, is measured for the fourth set of sixty panel samples as discussed above.

In an embodiment, for sixty panel samples having the thickness of 15 mm, the ratio <f_{m∥2}>/<f_{m∥1}> was 0.97 and the ratio <fₘ⊥₂>/<fₘ⊥₁> was 0.88. In an embodiment, for sixty panel samples having the thickness of 18 mm, the ratio <fₘ∥₂>/<f_{m∥1}> was 0.98 and the ratio <fₘ⊥₂>/<fₘ⊥₁> was 1.07.

As indicated by the values, in an embodiment, the aforementioned four ratios are in the limits:
- the ratio <E_{∥2}>/<E_{∥1}> is from 0.85 to 1.1 or from 0.9 to 1.1,
- the ratio <E⊥₂>/<E⊥₁> is from 0.85 to 1.1 or from 0.9 to 1.1,
- the ratio <f_{m∥2}>/<f_{m∥1}> is from 0.85 to 1.1 or from 0.9 to 1.1, and
- the ratio <fₘ⊥₂>/<fₘ⊥₁> is from 0.85 to 1.1 or from 0.9 to 1.1.

### Examples

Two types of plywood panels were manufactured. Plywood panels of the first type had five veneer layers of spruce and a thickness of 15 mm. As evident, the panels of the first type were similar to each other in the meaning described above. Plywood panels of the second type had seven veneer layers of spruce and a thickness of 18 mm. As evident, the panels of the second type were similar to each other in the meaning described above. Forty panels of both types were received for treatment.

Both surfaces of each of the panels were sanded. Sanding was performed in two stages. In a first stage, a surface with a grit of P60 was used in a sanding direction that was perpendicular to the grain orientation of the surface veneer layer that was sanded. In a second stage, a surface with a grit of P80 was used in a sanding direction that was perpendicular to the grain orientation of the surface veneer layer that was sanded.

An amount of from 180 g/m² to 200 g/m² of fire liquid retardant 300 comprising from 20 wt-% to 40 wt-% of HEDP was sprayed onto the first and second surfaces 112, 122 of each panel. The temperature of the surfaces 11, 122 of the panels and the temperature of the fire retardant temperature 300 before the treatment were over 15 °C.

The panels were arranged in a stack 200, and kept in the stack for 48 hours in order to allow the fire retardant 300 to impregnate to the surface veneer layers.

Ten panels of both types were randomly selected for fire test according to the standards EN 13823:2010 + A1:2014, EN ISO 11925-2:2010, and EN ISO 9239-1:2010.

### Fire tests according to EN 13823:2010 + A1:2014

Test specimens were prepared from ten of the panels according to the standard EN 13823:2010 + A1:2014 (see section 5). In the fire test, plywood specimens were mounted with standard vertical and horizontal joints on 40 mm × 40 mm untreated wood frame with metal screws. Air gap between product and standard gypsum plasterboard substrate was used. Specimens were conditioned according to standard EN 13238:2010 to constant mass (temperature 23 ± 1 °C, RH 50 ± 5%). The results of the fire test are given in Table 1.

**Table 1: results of the fire test according to the standard EN 13823:2010 + A1:2014.**

| **Specimen nr.** | **1** | **2** |
|---|---|---|
| Thickness (mm) | 18 | 15 |
| FIGRA_{0,2 MJ} (W/s) | 78,4 | 78,3 |
| FIGRA_{0,4 MJ} (W/s) | 77,4 | 78,3 |
| THR₆₀₀ₛ (MJ) | 5,6 | 5,2 |
| SMOGRA (m²/s²) | 11,2 | 13,3 |
| TSP₆₀₀ₛ (m²) | 45,4 | 44,9 |
| Flaming droplets | no | no |
| Lateral flame spread | no | no |

As indicated in the table, the following criteria are fulfilled: FIGRA ≤ 120 W/s, THR₆₀₀ₛ ≤ 7.5 MJ, SMOGRA ≤ 30 m²/s², and TSP₆₀₀ₛ ≤ 50 m².

### Fire test according to EN ISO 11925-2:2010

Test specimens were prepared from ten of the panels according to the standard EN ISO 11925-2:2010 (see section 5). Specimens were conditioned to constant mass according to standard EN 13238:2010 (temperature 23 ± 1 °C, RH 50 ± 5%). Flame source was applied to surface or bottom edge of the specimens. Three specimens per grain orientation and flame application were tested with both panel thicknesses. Flame application time was 30 s and total test duration was 60 s. Damage by flame (flame spread) varied between 50 to 70 mm. Ignition of filter paper did not occur.

Flame spread was less than 150 mm in all tested samples. In connection with the data of Table 1, it is seen that the specimens fulfilled the criteria set for fire class B-s1, d0 of the standard EN 13501-1:2007+ A1:2009.

### Fire tests according to EN ISO 9239-1:2010

Test specimens were prepared from ten of the panels according to the standard EN ISO 9239-1:2010 (see section 6). Substrates were not used. Specimens were conditioned according to standard EN 13238:2010. Results of the test are indicated in Table 2.

**Table 2: results of the fire test according to the standard EN ISO 9239-1:2010. The directions of the samples are indicated by the arrows: → for longitudinal, and ↑ for transverse.**

| **Specimen nr.** | **3** | **4** | **5** | **6** |
|---|---|---|---|---|
| Grain direction | → | ↑ | → | ↑ |
| Thickness (mm) | 15 | 15 | 18 | 18 |
| CHF (kW/m²) | ≥ 10,9 | ≥ 10,9 | 12,1 | 12,1 |
| Sₜ (% × min) | 13,3 | 11,0 | 13,0 | 7,7 |

As indicated in Table 2 and taking into account the results from the tests according to standard EN ISO 11925-2:2010, the specimens fulfilled the criteria set for fire class B_{fl}-s1 of the standard EN 13501-1:2007+ A1:2009.

### Test according to standard EN 310

Ten of the panels were also tested according to the standard EN 310 to determine the longitudinal and transverse elastic moduli E_{∥} and E⊥, respectively, and the longitudinal and transverse shear strength f_{m∥} and fₘ⊥, respectively. The results are given above. In short, the 15 mm panels had a first bending strength f_{m∥} from 37 N/mm² to 52 N/mm², a second bending strength fₘ⊥ from 19 N/mm² to 28 N/mm², a first modulus of elasticity E_{∥} from 4600 N/mm² to 6000 N/mm², and a second modulus of elasticity E⊥ from 1800 N/mm² to 2700 N/mm². The 18 mm panels had a first bending strength f_{m∥} from 37 N/mm² to 53 N/mm², a second bending strength fₘ⊥ from 27 N/mm² to 44 N/mm², a first modulus of elasticity E_{∥} from 4800 N/mm² to 6800 N/mm² , a second modulus of elasticity E⊥ from 2800 N/mm² to 4300 N/mm².

### Hygroscopicity test according to the NT Method

Ten of the panels were subjected to a hygroscopicity test as specified in the document "Nodrtest Method, build 504, Approved 2003-12". The weight increase in the test was less than 30 %.

As indicated by this value, the specimens fulfilled the criteria set for the class "DFR Class INT" of the document "NT Method: DURABILITY OF REACTION TO FIRE - PERFORMANCE CLASSES OF FIRE-RETARDANT TREATED WOOD-BASED PRODUCTS IN INTERIOR AND EXTERIOR END USE APPLICATIONS; NT FIRE 054, Approved 2006-06".

### Test according to standard EN 310 of similar panels

Also the elastic moduli and the bending strengths of untreated panels were tested according to EN 310. The only difference between these panels and the treated panels was that the treated panels were treated. In this way, the panels were similar in the sense discussed above. As detailed in the description, the elastic moduli and the shear strengths did not change as a result of application of fire retardant.

## Claims

1. A method for improving fire resistance of a plywood panel (100), the method comprising
- receiving a plywood panel (100), the plywood panel (100) comprising
• a first veneer layer (110),
• a second veneer layer (120), and
• adhesive (190) in between the first veneer layer and the second veneer layer,
• the first veneer layer (110) forming a first surface (112) of the plywood panel (100) and having grains oriented in a first grain direction (D1),
**characterized by**
- sanding the first surface (112) of the plywood panel (100) in a first sanding direction (R1) that forms an angle of at least 30 degrees with the first grain direction (D1), and
- after said sanding the first surface, applying fire retardant (300) onto the first surface (112) having a temperature of at least 15 °C, wherein
- the fire retardant (300) is a liquid fire retardant solution (300) that comprises 1-hydroxyethylidene-1,1-diphosphonic acid (HEDP),
- the fire retardant (300) is applied onto the first surface (112) such that a pressure by which the fire retardant (300) is applied does not go below 0.5 bar(a), and
- the fire retardant (300) is not applied by pressure impregnation with a pressure of at least 2 bar(a).

2. The method of claim 1, wherein
- the second veneer layer (120) forms a second surface (122) of the plywood panel (100) and has grains oriented in a second grain direction (D2), the method comprising
- sanding the second surface (122) of the plywood panel (100) in a second sanding direction (R2) that forms an angle of at least 30 degrees with the second grain direction (D2), and
- after said sanding the second surface, applying fire retardant (300) onto the second surface (122) having a temperature of at least 15 °C.

3. The method of claim 1 or 2, comprising, after said applying fire retardant (300),
- arranging the plywood panel (100), onto which surface (112) or surfaces (112, 122) the fire retardant (300) has been applied, into a stack (200) of plywood panels in order to press the fire retardant (300) into the plywood panel (100); preferably
- the panel is held in the stack (200) for at least 24 hours.

4. The method of any of the claims 1 to 3, wherein,
- such an amount of the fire retardant (300) is applied onto the first surface (112) that
- at least 8 g/m² of phosphorous is applied onto the first surface (112), and
- when starting to apply the fire retardant (300) onto the first surface (112), the moisture content of the first veneer layer (110) is from 3 % to 14 %, whereby the method comprises
- impregnating the first veneer layer (110) with the fire retardant (300) to form a plywood panel (100) that is fire resistant according the standard EN 13501-1:2007+A1:2009
• as indicated by the classes
∘ fire behavior B,
∘ smoke production s1, and
∘ flaming droplets d0 or
• as indicated by the classes
∘ fire behavior B_{fl} and
∘ smoke production s1.

5. The method of any of the claims 1 to 4, wherein
- the fire retardant (300) comprises phosphorus;
preferably,
- the fire retardant (300) is a liquid fire retardant solution (300) that comprises from 2 wt% to 30 wt%, such as from 5 wt% to 15 wt%, phosphorus as measured according to SFS-EN ISO 11885;
in an embodiment,
- the fire retardant (300) is a liquid fire retardant solution (300) that further comprises at least 4 ppm of at least one of calcium, iron, potassium, sodium, sulphur, copper, and zinc, as measured according to SFS-EN ISO 11885;
in an embodiment,
- the fire retardant (300) is a liquid fire retardant solution (300) that further comprises at least 4 ppm of each one of calcium, iron, potassium, sodium, sulphur, and zinc, as measured according to SFS-EN ISO 11885.

6. The method of any of the claims 1 to 5, wherein
- the liquid fire retardant solution (300) comprises at least one of
• ethylenediaminetetramethylenephosphonic acid (EDTMP) or salt thereof,
• diethylenetriaiminepentamethylenephosphonic acid (DTPMP) or salt thereof;
preferably,
• the fire retardant (300) comprises at most 1 ppm, or is free from, each one of a heavy metal, boron, a halogenated compound.

7. The method of any of the claims 1 to 6, wherein
- the liquid fire retardant solution (300) comprises from 10 wt-% to 60 wt-% 1-hydroxyethylidene-1,1-diphosphonic acid (HEDP);

8. The method of any of the claims 1 to 7, wherein
- such an amount of the fire retardant (300) is applied onto the second surface (122) that at least 8 g/m² of phosphorous is applied onto the second surface (122).

9. The method of any of the claims 1 to 8, wherein
- the fire retardant (300) is a liquid fire retardant solution (300) that comprises from 20 wt-% to 40 wt-% 1-hydroxyethylidene-1,1-diphosphonic acid (HEDP) and
- at least 150 g/m² of the liquid fire retardant solution (300) is applied onto the first surface (112);
preferably,
- at most 250 g/m² of the liquid fire retardant solution (300) is applied onto the first surface (112);
more preferably
- from 150 g/m² to 250 g/m² of the liquid fire retardant solution (300) is applied also onto the second surface (122).

10. The method of any of the claims 1 to 9, wherein
- the sanding of the first surface (112) of the plywood panel (100) is performed with a first sanding surface (322) having a grit of at most P220, such as from P20 to P220, according to the standard ISO 6344;
preferably,
- the sanding of the second surface (122) of the plywood panel (100) is performed with a sanding surface (322, 324) having a grit of at most P220, such as from P20 to P220, according to the standard ISO 6344.

11. A plywood panel (100) comprising
- a first veneer layer (110) comprising a first surface (112) of the plywood panel (100), such that all veneer layers (110, 120, 130) of the plywood panel (100) are left on the same side of the first surface (112),
- a second veneer layer (120), such that all veneer layers of the plywood panel (100) are left on the same side of
• a second interface (122) between the second veneer (120) and a coating (196), or
• a second surface (122) of the panel (100), the second veneer layer (120) comprising the second surface (122), and
- a third veneer layer (130) arranged in between the first veneer layer (110) and the second veneer layer (120),
- adhesive (190) in between the first veneer layer (110) and the second veneer layer (120), wherein
- the panel comprises only such wood to which a fire retardant has not been applied by pressure impregnation with a pressure of at least 2 bar(a) and that has not been treated by a pressure that goes below 0.5 bar(a), and
- the first veneer layer (110) has been treated with a solution comprising hydroxyethylidene-1,1-diphosphonic acid (HEDP),
**characterized in that**
- the first surface (112) comprises traces indicative of sanding the first surface (112) of the plywood panel (100) in a first sanding direction (R1) that forms an angle of at least 30 degrees with a grain direction (D1) of the first veneer layer (110),
- a content (c130) of phosphorous of the third veneer layer (130) is at most half of a content (c110) of phosphorous of the first veneer layer (110), and
- the first veneer layer (110) comprises at least 8 g/m² of phosphorous, whereby
- the plywood panel (100) is fire resistant according the standard EN 13501-1:2007+A1:2009
• as indicated by the classes
∘ fire behaviour B,
∘ smoke production s1, and
∘ flaming droplets d0, or
• as indicated by the classes
∘ fire behavior B_{fl} and
∘ smoke production s1.

12. The plywood panel of claim 11, wherein
- the second veneer layer (120) forms a second surface (122) of the plywood panel,
- the second surface (122) comprises traces indicative of sanding the second surface (122) of the plywood panel (100) in a second sanding direction (R2) that forms an angle of at least 30 degrees with a grain direction (D2) of the second veneer layer (120), and
- the second veneer layer (120) comprises at least 8 g/m² of phosphorous; preferably,
- the grain direction (D1) of the first veneer layer (110) is parallel to the grain direction (D2) of the second veneer layer (120).

13. The plywood panel (100) of the claim 11 or 12 wherein
- a content (c130) of phosphorous of the third veneer layer (130) is at most 25 % of a content (c110) of phosphorous of the first veneer layer (110).

14. The plywood panel (100) of the claim 11, 12, or 13, wherein
- the third veneer layer (130) comprises at most 5 g/m² or at most 2g/m² of phosphorous.

15. The plywood panel (100) of any of the claims 11 to 14, wherein
- the panel has a weight increase of less than 30 % in the test detailed in the document "Nodrtest Method, build 504, Approved 2003-12".

16. A plywood panel (100) of any of the claims 11 to 15, wherein
- the plywood panel (100) comprises five veneer layers of spruce,
- the (tₚ) thickness of the plywood panel (100) is 15 mm, and
- the plywood panel (100) has the following mechanical properties
• a first bending strength (f_{m∥}) from 37 N/mm² to 52 N/mm² as measured in a longitudinal test of the standard EN310,
• a second bending strength (fₘ⊥) from 19 N/mm² to 28 N/mm² as measured in a transverse test of the standard EN310,
• a first modulus of elasticity (E_{∥}) from 4600 N/mm² to 6000 N/mm² as measured in a longitudinal test of the standard EN310, and
• a second modulus of elasticity (E⊥) from 1800 N/mm² to 2700 N/mm² as measured in a transverse test of the standard EN310.

17. A plywood panel (100) of any of the claims 11 to 15, wherein
- the plywood panel (100) comprises seven veneer layers of spruce,
- the (tₚ) thickness of the plywood panel (100) is 18 mm, and
- and the plywood panel (100) has the following mechanical properties
• a first bending strength (f_{m∥}) from 37 N/mm² to 53 N/mm² as measured in a longitudinal test of the standard EN310,
• a second bending strength (fₘ⊥) from 27 N/mm² to 44 N/mm² as measured in a transverse test of the standard EN310,
• a first modulus of elasticity (E_{∥}) from 4800 N/mm² to 6800 N/mm² as measured in a longitudinal test of the standard EN310, and
• a second modulus of elasticity (E⊥) from 2800 N/mm² to 4300 N/mm², as measured in a transverse test of the standard EN310.

18. The method of any of the claims 1 to 10 or the plywood panel of any of the claims 11 to 17, wherein
- the first veneer layer (110) comprises softwood, such as spruce or pine; preferably,
- also the second veneer layer (120) comprises softwood, such as spruce or pine;
preferably
- all the veneer layers of the plywood panel are made from the same wood species.

19. The method of any of the claims 1 to 10 or 18 or the plywood panel of any of the claims 11 to 18, wherein
- the thickness of the plywood panel (100) is from 4 mm to 75 mm, such as from 9 mm to 21 mm and
- the plywood panel (100) comprises from three to twenty-five veneer layers (110, 120, 130), each of which is made from softwood;
preferably,
- the thickness of the plywood panel (100) is at least 15 mm,
- the thickness (tsv1) of the first veneer layer (110) is from 1.5 mm to 3.5 mm and the thickness (tsv2) the second veneer layer (120) is from 1.5 mm to 3.5 mm;
- the plywood panel (100) comprises at least five veneer layers (110, 120, 130), each of which is made from softwood, and
- the panel has a first bending strength (f_{m∥}) of at least 37 N/mm², a second bending strength (fₘ⊥) of at least 19 N/mm², a first modulus of elasticity (E_{∥}) of at least 4600 N/mm², and a second modulus of elasticity (E⊥) of at least 1800 N/mm², as measured and defined in the standard EN 310.

20. The method of any of the claims 1 to 10 or 18 or 19 or the plywood panel of any of the claims 11 to 18, wherein
- the adhesive (190) comprises polymerized phenol formaldehyde resin and/or polymerized lignin-phenol formaldehyde resin.

## Patentansprüche

1. Verfahren zur Verbesserung der Feuerbeständigkeit einer Sperrholzplatte (100), wobei das Verfahren Folgendes umfasst
- Empfangen einer Sperrholzplatte (100), wobei die Sperrholzplatte (100) Folgendes umfasst
• eine erste Furnierschicht (110),
• eine zweite Furnierschicht (120), und
• Klebstoff (190) zwischen der ersten Furnierschicht und der zweiten Furnierschicht,
• wobei die erste Furnierschicht (110) eine erste Oberfläche (112) der Sperrholzplatte (100) bildet und Maserungen aufweist, die in einer ersten Maserungsrichtung (D1) ausgerichtet sind,
**gekennzeichnet durch**
- Schleifen der ersten Oberfläche (112) der Sperrholzplatte (100) in einer ersten Schleifrichtung (R1), die mit der ersten Maserungsrichtung (D1) einen Winkel von mindestens 30 Grad bildet, und
- nach dem Schleifen der ersten Oberfläche Aufbringen eines Brandschutzmittels (300) auf die erste Oberfläche (112) mit einer Temperatur von mindestens 15 °C, wobei
- das Brandschutzmittel (300) eine flüssige Brandschutzlösung (300) ist, die 1-Hydroxyethyliden-1,1-Diphosphonsäure (HEDP) enthält,
- das Brandschutzmittel (300) auf die erste Oberfläche (112) so aufgebracht wird, dass ein Druck, mit dem das Brandschutzmittel (300) aufgebracht wird, 0,5 bar(a) nicht unterschreitet, und
- das Brandschutzmittel (300) nicht durch Druckimprägnierung mit einem Druck von mindestens 2 bar(a) aufgebracht wird.

2. Verfahren nach Anspruch 1, wobei
- die zweite Furnierschicht (120) eine zweite Oberfläche (122) der Sperrholzplatte (100) bildet und Maserungen aufweist, die in einer zweiten Maserungsrichtung (D2) ausgerichtet sind, wobei das Verfahren Folgendes umfasst
- Schleifen der zweiten Oberfläche (122) der Sperrholzplatte (100) in einer zweiten Schleifrichtung (R2), die mit der zweiten Maserungsrichtung (D2) einen Winkel von mindestens 30 Grad bildet, und
- nach dem Schleifen der zweiten Oberfläche Aufbringen eines Brandschutzmittels (300) auf die zweite Oberfläche (122), das eine Temperatur von mindestens 15 °C aufweist.

3. Verfahren nach Anspruch 1 oder 2, umfassend nach dem Aufbringen des Brandschutzmittels (300),
- Anordnen der Sperrholzplatte (100), auf deren Oberfläche (112) oder Oberflächen (112, 122) das Brandschutzmittel (300) aufgebracht wurde, in einem Stapel (200) von Sperrholzplatten, um das Brandschutzmittel (300) in die Sperrholzplatte (100) einzupressen;
vorzugsweise
- die Platte mindestens 24 Stunden lang im Stapel (200) gehalten wird.

4. Verfahren nach einem der Ansprüche 1 bis 3, wobei,
- eine solche Menge des Brandschutzmittels (300) auf die erste Oberfläche (112) aufgetragen wird, dass
- mindestens 8 g/m² Phosphor auf die erste Oberfläche (112) aufgetragen werden, und
- wenn mit dem Auftragen des Brandschutzmittels (300) auf die erste Oberfläche (112) begonnen wird, der Feuchtigkeitsgehalt der ersten Furnierschicht (110) 3 % bis 14 % beträgt, wobei das Verfahren Folgendes umfasst
- Imprägnieren der ersten Furnierschicht (110) mit dem Brandschutzmittel (300), um eine Sperrholzplatte (100) zu bilden, die gemäß der Norm EN 13501-1:2007+A1:2009 feuerbeständig ist
• entsprechend den Klassen
∘ Brandverhalten B,
∘ Rauchentwicklung s1, und
∘ brennendes Abtropfen d0 oder
• entsprechend den Klassen
∘ Brandverhalten B_{fi} und
∘ Rauchentwicklung s1.

5. Verfahren nach einem der Ansprüche 1 bis 4, wobei
- das Brandschutzmittel (300) Phosphor enthält; vorzugsweise
- das Brandschutzmittel (300) eine flüssige Brandschutzlösung (300) ist, die 2 Gew.-% bis 30 Gew.-%, beispielsweise 5 Gew.-% bis 15 Gew.-% Phosphor enthält, gemessen gemäß SFS-EN ISO 11885;
in einer Ausführungsform,
- das Brandschutzmittel (300) eine flüssige Brandschutzlösung (300) ist, die zusätzlich mindestens 4 ppm von mindestens einem der Stoffe Kalzium, Eisen, Kalium, Natrium, Schwefel, Kupfer und Zink enthält, gemessen gemäß SFS-EN ISO 11885;
in einer Ausführungsform,
- das Brandschutzmittel (300) eine flüssige Brandschutzlösung (300) ist, die zusätzlich mindestens 4 ppm von jedem der Stoffe Kalzium, Eisen, Kalium, Natrium, Schwefel und Zink enthält, gemessen gemäß SFS-EN ISO 11885.

6. Verfahren nach einem der Ansprüche 1 bis 5, wobei
- die flüssige Brandschutzlösung (300) mindestens eines der folgenden Stoffe umfasst
• Ethylendiamintetramethylenphosphonsäure (EDTMP) oder ein Salz davon,
• Diethylentriaminpentamethylenphosphonsäure (DTPMP) oder ein Salz davon;
vorzugsweise,
• das Brandschutzmittel (300) höchstens 1 ppm Schwermetalle umfasst oder frei von jedem eines Schwermetalls, Bor und einer halogenierten Verbindung ist.

7. Verfahren nach einem der Ansprüche 1 bis 6, wobei
- die flüssige Brandschutzlösung (300) 10 Gew.-% bis 60 Gew.-% 1-Hydroxyethyliden-1,1-Diphosphonsäure (HEDP) umfasst;

8. Verfahren nach einem der Ansprüche 1 bis 7, wobei
- eine solche Menge des Brandschutzmittels (300) auf die zweite Oberfläche (122) aufgetragen wird, dass mindestens 8 g/m² Phosphor auf die zweite Oberfläche (122) aufgetragen werden.

9. Verfahren nach einem der Ansprüche 1 bis 8, wobei
- das Brandschutzmittel (300) eine flüssige Brandschutzlösung (300) ist, die 20 Gew.-% bis 40 Gew.-% 1-Hydroxyethyliden-1,1-Diphosphonsäure (HEDP) enthält und
- mindestens 150 g/m² der flüssigen Brandschutzlösung (300) auf die erste Oberfläche (112) aufgetragen werden;
vorzugsweise,
- höchstens 250 g/m² der flüssigen Brandschutzlösung (300) auf die erste Oberfläche (112) aufgetragen werden;
noch bevorzugter
- 150 g/m² bis 250 g/m² der flüssigen Brandschutzlösung (300) auch auf die zweite Oberfläche (122) aufgetragen werden.

10. Verfahren nach einem der Ansprüche 1 bis 9, wobei
- das Schleifen der ersten Oberfläche (112) der Sperrholzplatte (100) mit einer ersten Schleifoberfläche (322) mit einer Körnung von höchstens P220, beispielsweise von P20 bis P220, gemäß der Norm ISO 6344 durchgeführt wird;
vorzugsweise,
- das Schleifen der zweiten Oberfläche (122) der Sperrholzplatte (100) mit einer Schleifoberfläche (322, 324) mit einer Körnung von höchstens P220, beispielsweise von P20 bis P220, gemäß der Norm ISO 6344 durchgeführt wird.

11. Sperrholzplatte (100), umfassend
- eine erste Furnierschicht (110), die eine erste Oberfläche (112) der Sperrholzplatte (100) umfasst, so dass alle Furnierschichten (110, 120, 130) der Sperrholzplatte (100) auf derselben Seite der ersten Oberfläche (112) verbleiben,
- eine zweite Furnierschicht (120), so dass alle Furnierschichten der Sperrholzplatte (100) auf derselben Seite von Folgendem verbleiben
• einer zweiten Schnittstelle (122) zwischen dem zweiten Furnier (120) und einer Beschichtung (196), oder
• einer zweiten Oberfläche (122) der Platte (100), wobei die zweite Furnierschicht (120) die zweite Oberfläche (122) umfasst, und
- eine dritte Furnierschicht (130), die zwischen der ersten Furnierschicht (110) und der zweiten Furnierschicht (120) angeordnet ist,
- Klebstoff (190) zwischen der ersten Furnierschicht (110) und der zweiten Furnierschicht (120), wobei
- die Platte nur Holz umfasst, auf das kein Brandschutzmittel durch Druckimprägnierung mit einem Druck von mindestens 2 bar(a) aufgetragen wurde und das nicht mit einem Druck behandelt wurde, der unter 0,5 bar(a) liegt, und
- die erste Furnierschicht (110) mit einer Lösung behandelt wurde, die Hydroxyethyliden-1,1-Diphosphonsäure (HEDP) enthält,
**dadurch gekennzeichnet, dass**
- die erste Oberfläche (112) Spuren aufweist, die auf ein Schleifen der ersten Oberfläche (112) der Sperrholzplatte (100) in einer ersten Schleifrichtung (R1) hinweisen, die einen Winkel von mindestens 30 Grad mit einer Maserungsrichtung (D1) der ersten Furnierschicht (110) bildet,
- ein Phosphorgehalt (c130) der dritten Furnierschicht (130) höchstens die Hälfte eines Phosphorgehalts (c110) der ersten Furnierschicht (110) beträgt, und
- die erste Furnierschicht (110) mindestens 8 g/m² Phosphor aufweist,
wobei
- die Sperrholzplatte (100) gemäß der Norm EN 13501-1:2007+A1:2009 schwer entflammbar ist
• entsprechend den Klassen
∘ Brandverhalten B,
∘ Rauchentwicklung s1, und
∘ brennendes Abtropfen d0, oder
• entsprechend den Klassen
∘ Brandverhalten B_{fl} und
∘ Rauchentwicklung s1.

12. Sperrholzplatte nach Anspruch 11, wobei
- die zweite Furnierschicht (120) eine zweite Oberfläche (122) der Sperrholzplatte bildet,
- die zweite Oberfläche (122) Spuren aufweist, die auf ein Schleifen der zweiten Oberfläche (122) der Sperrholzplatte (100) in einer zweiten Schleifrichtung (R2) hinweisen, die einen Winkel von mindestens 30 Grad mit einer Maserungsrichtung (D2) der zweiten Furnierschicht (120) bildet, und
- die zweite Furnierschicht (120) mindestens 8 g/m² Phosphor umfasst;
vorzugsweise,
- die Maserungsrichtung (D1) der ersten Furnierschicht (110) parallel zur Maserungsrichtung (D2) der zweiten Furnierschicht (120) ist.

13. Sperrholzplatte (100) nach Anspruch 11 oder 12, wobei
- ein Phosphorgehalt (c130) der dritten Furnierschicht (130) höchstens 25 % eines Phosphorgehalts (c110) der ersten Furnierschicht (110) beträgt.

14. Sperrholzplatte (100) nach Anspruch 11, 12 oder 13, wobei
- die dritte Furnierschicht (130) höchstens 5 g/m² oder höchstens 2 g/m² Phosphor umfasst.

15. Sperrholzplatte (100) nach einem der Ansprüche 11 bis 14, wobei
- die Platte in dem im Dokument "Nodrtest-Methode, Build 504, genehmigt 2003-12" beschriebenen Test eine Gewichtszunahme von weniger als 30 % aufweist.

16. Sperrholzplatte (100) nach einem der Ansprüche 11 bis 15, wobei
- die Sperrholzplatte (100) fünf Furnierschichten aus Fichte umfasst,
- die (tₚ) Dicke der Sperrholzplatte (100) 15 mm beträgt, und
- die Sperrholzplatte (100) die folgenden mechanischen Eigenschaften aufweist
• eine erste Biegefestigkeit (f_{m∥}) von 37 N/mm2 bis 52 N/mm², gemessen in einem Längsversuch nach der Norm EN310,
• eine zweite Biegefestigkeit (fₘ⊥) von 19 N/mm² bis 28 N/mm² gemessen im Querversuch nach Norm EN310,
• einen ersten Elastizitätsmodul (E_{∥}) von 4600 N/mm² bis 6000 N/mm² gemessen im Längsversuch nach Norm EN310, und
• einen zweiten Elastizitätsmodul (E⊥) von 1800 N/mm² bis 2700 N/mm² gemessen im Querversuch nach Norm EN310.

17. Sperrholzplatte (100) nach einem der Ansprüche 11 bis 15, wobei
- die Sperrholzplatte (100) sieben Furnierschichten aus Fichte umfasst,
- die (tₚ) Dicke der Sperrholzplatte (100) 18 mm beträgt, und
- und die Sperrholzplatte (100) die folgenden mechanischen Eigenschaften aufweist
• eine erste Biegefestigkeit (f_{m∥}) von 37 N/mm² bis 53 N/mm², gemessen in einem Längsversuch nach der Norm EN310,
• eine zweite Biegefestigkeit (fₘ⊥) von 27 N/mm² bis 44 N/mm², gemessen in einem Querversuch nach der Norm EN310,
• einen ersten Elastizitätsmodul (E_{∥}) von 4800 N/mm² bis 6800 N/mm², gemessen in einem Längsversuch nach der Norm EN310, und
• einen zweiten Elastizitätsmodul (E⊥) von 2800 N/mm² bis 4300 N/mm², gemessen im Querversuch nach Norm EN310.

18. Verfahren nach einem der Ansprüche 1 bis 10 oder Sperrholzplatte nach einem der Ansprüche 11 bis 17, wobei
- die erste Furnierschicht (110) Weichholz, wie Fichte oder Kiefer, umfasst;
vorzugsweise,
- auch die zweite Furnierschicht (120) Weichholz, wie Fichte oder Kiefer, umfasst;
vorzugsweise
- alle Furnierschichten der Sperrholzplatte aus der gleichen Holzart hergestellt sind.

19. Verfahren nach einem der Ansprüche 1 bis 10 oder 18 oder Sperrholzplatte nach einem der Ansprüche 11 bis 18, wobei
- die Dicke der Sperrholzplatte (100) 4 mm bis 75 mm beträgt, beispielsweise 9 mm bis 21 mm und
- die Sperrholzplatte (100) aus drei bis fünfundzwanzig Furnierschichten (110, 120, 130) besteht, von denen jede aus Weichholz besteht;
vorzugsweise,
- die Dicke der Sperrholzplatte (100) mindestens 15 mm beträgt,
- die Dicke (tsv1) der ersten Furnierschicht (110) 1,5 mm bis 3,5 mm beträgt und die Dicke (tsv2) der zweiten Furnierschicht (120) 1,5 mm bis 3,5 mm beträgt;
- die Sperrholzplatte (100) mindestens fünf Furnierschichten (110, 120, 130) umfasst, von denen jede aus Nadelholz besteht, und
- die Platte eine erste Biegefestigkeit (f_{m∥}) von mindestens 37 N/mm², eine zweite Biegefestigkeit (fₘ⊥) von mindestens 19 N/mm², einen ersten Elastizitätsmodul (E_{∥}) von mindestens 4600 N/mm² und einen zweiten Elastizitätsmodul (E⊥) von mindestens 1800 N/mm² aufweist, wie in der Norm EN 310 gemessen und definiert.

20. Verfahren nach einem der Ansprüche 1 bis 10 oder 18 oder 19 oder Sperrholzplatte nach einem der Ansprüche 11 bis 18, wobei
- der Klebstoff (190) polymerisiertes Phenol-Formaldehyd-Harz und/oder polymerisiertes Lignin-Phenol-Formaldehyd-Harz umfasst.

## Revendications

1. Procédé d'amélioration de la résistance au feu d'un panneau de contreplaqué (100), le procédé comprenant
- la réception d'un panneau de contreplaqué (100), le panneau de contreplaqué (100) comprenant
• une première couche de placage (110),
• une deuxième couche de placage (120), et
• un adhésif (190) entre la première couche de placage et la deuxième couche de placage,
• la première couche de placage (110) formant une première surface (112) du panneau de contreplaqué (100) et ayant des grains orientés dans une première direction de grain (D1),
**caractérisé par**
- le ponçage de la première surface (112) du panneau de contreplaqué (100) dans une première direction de ponçage (R1) qui forme un angle d'au moins 30 degrés avec la première direction de grain (D1), et
- après ledit ponçage de la première surface, l'application d'un produit ignifuge (300) sur la première surface (112) ayant une température d'au moins 15 °C, dans lequel
- le produit ignifuge (300) est une solution de produit ignifuge liquide (300) qui comprend de l'acide 1-hydroxyéthylidène-1,1-diphosphonique (HEDP),
- le produit ignifuge (300) est appliqué sur la première surface (112) de sorte que la pression par laquelle le produit ignifuge (300) est appliqué ne descende pas en dessous de 0,5 bar(a), et
- le produit ignifuge (300) n'est pas appliqué par imprégnation sous pression avec une pression d'au moins 2 bar(a).

2. Procédé selon la revendication 1, dans lequel
- la deuxième couche de placage (120) forme une seconde surface (122) du panneau de contreplaqué (100) et a des grains orientés dans une seconde direction de grain (D2), le procédé comprenant
- le ponçage de la seconde surface (122) du panneau de contreplaqué (100) dans une seconde direction de ponçage (R2) qui forme un angle d'au moins 30 degrés avec la seconde direction de grain (D2), et
- après ledit ponçage de la seconde surface, l'application d'un produit ignifuge (300) sur la seconde surface (122) ayant une température d'au moins 15 °C.

3. Procédé selon la revendication 1 ou 2, comprenant, après ladite application du produit ignifuge (300),
- l'agencement du panneau de contreplaqué (100), sur laquelle surface (112) ou lesquelles surfaces (112, 122) a été appliqué le produit ignifuge (300), en une pile (200) de panneaux de contreplaqué afin de presser le produit ignifuge (300) dans le panneau de contreplaqué (100) ; de préférence
- le panneau est maintenu dans la pile (200) pendant au moins 24 heures.

4. Procédé selon l'une quelconque des revendications 1 à 3, dans lequel,
- une telle quantité du produit ignifuge (300) est appliquée sur la première surface (112) que
- au moins 8 g/m² de phosphore sont appliqués sur la première surface (112), et
- lors du début de l'application du produit ignifuge (300) sur la première surface (112), la teneur en humidité de la première couche de placage (110) est de 3 % à 14 %, moyennant quoi le procédé comprend
- l'imprégnation de la première couche de placage (110) avec le produit ignifuge (300) pour former un panneau de contreplaqué (100) qui est résistant au feu selon la norme EN 13501-1:2007+A1:2009
• comme indiqué par les classes
o comportement au feu B,
o production de fumée s1, et
o gouttelettes enflammées d0 ou
• comme indiqué par les classes
o comportement au feu B_{fl} et
o production de fumée s1.

5. Procédé selon l'une quelconque des revendications 1 à 4, dans lequel
- le produit ignifuge (300) comprend du phosphore ; de préférence,
- le produit ignifuge (300) est une solution de produit ignifuge liquide (300) qui comprend de 2 % en poids à 30 % en poids, par exemple de 5 % en poids à 15 % en poids, de phosphore tel que mesuré selon la norme SFS-EN ISO 11885 ;
dans un mode de réalisation,
- le produit ignifuge (300) est une solution de produit ignifuge liquide (300) qui comprend en outre au moins 4 ppm d'au moins un élément parmi le calcium, le fer, le potassium, le sodium, le soufre, le cuivre et le zinc, tel que mesuré selon la norme SFS-EN ISO 11885 ; dans un mode de réalisation,
- le produit ignifuge (300) est une solution de produit ignifuge liquide (300) qui comprend en outre au moins 4 ppm de chacun parmi le calcium, le fer, le potassium, le sodium, le soufre, le cuivre et le zinc, tel que mesuré selon la norme SFS-EN ISO 11885.

6. Procédé selon l'une quelconque des revendications 1 à 5, dans lequel
- la solution de produit ignifuge liquide (300) comprend au moins l'un parmi
• l'acide éthylènediaminetétraméthylènephosphonique (EDTMP) ou un sel de celui-ci,
• l'acide diéthylènetriaminepentaméthylènephosphonique (DTPMP) ou un sel de celui-ci ;
de préférence,
• le produit ignifuge (300) comprend au plus 1 ppm, ou est exempt, de chacun parmi un métal lourd, le bore, un composé halogéné.

7. Procédé selon l'une quelconque des revendications 1 à 6, dans lequel
- la solution de produit ignifuge liquide (300) comprend de 10 % en poids à 60 % en poids d'acide 1-hydroxyéthylidène-1,1-diphosphonique (HEDP) ;

8. Procédé selon l'une quelconque des revendications 1 à 7, dans lequel
- une telle quantité du produit ignifuge (300) est appliquée sur la seconde surface (122) qu'au moins 8 g/m² de phosphore sont appliqués sur la seconde surface (122).

9. Procédé selon l'une quelconque des revendications 1 à 8, dans lequel
- le produit ignifuge (300) est une solution de produit ignifuge liquide (300) qui comprend de 20 % en poids à 40 % en poids d'acide 1-hydroxyéthylidène-1,1-diphosphonique (HEDP) et
- au moins 150 g/m² de la solution de produit ignifuge liquide (300) sont appliqués sur la première surface (112) ;
de préférence,
- au plus 250 g/m² de la solution de produit ignifuge liquide (300) sont appliqués sur la première surface (112) ;
plus préférablement
- de 150 g/m² à 250 g/m² de la solution de produit ignifuge liquide (300) sont appliqués également sur la seconde surface (122).

10. Procédé selon l'une quelconque des revendications 1 à 9, dans lequel
- le ponçage de la première surface (112) du panneau de contreplaqué (100) est exécuté avec une première surface de ponçage (322) ayant un grain d'au plus P220, tel que de P20 à P220, selon la norme ISO 6344 ;
de préférence,
- le ponçage de la seconde surface (122) du panneau de contreplaqué (100) est exécuté avec une surface de ponçage (322, 324) ayant un grain d'au plus P220, tel que de P20 à P220, selon la norme ISO 6344.

11. Panneau de contreplaqué (100) comprenant
- une première couche de placage (110) comprenant une première surface (112) du panneau de contreplaqué (100), de sorte que toutes les couches de placage (110, 120, 130) du panneau de contreplaqué (100) sont laissées sur le même côté de la première surface (112),
- une deuxième couche de placage (120), de sorte que toutes les couches de placage du panneau de contreplaqué (100) sont laissées sur le même côté
• d'une seconde interface (122) entre le second placage (120) et un revêtement (196), ou
• d'une seconde surface (122) du panneau (100), la deuxième couche de placage (120) comprenant la seconde surface (122), et
- une troisième couche de placage (130) agencée entre la première couche de placage (110) et la deuxième couche de placage (120),
- un adhésif (190) entre la première couche de placage (110) et la deuxième couche de placage (120), dans lequel
- le panneau comprend uniquement du bois sur lequel un produit ignifuge n'a pas été appliqué par imprégnation sous pression à une pression d'au moins 2 bar(a) et qui n'a pas été traité par une pression inférieure à 0,5 bar(a), et
- la première couche de placage (110) a été traitée avec une solution comprenant de l'acide hydroxyéthylidène-1,1-diphosphonique (HEDP),
**caractérisé en ce que**
- la première surface (112) comprend des traces indiquant le ponçage de la première surface (112) du panneau de contreplaqué (100) dans une première direction de ponçage (R1) qui forme un angle d'au moins 30 degrés avec une direction de grain (D1) de la première couche de placage (110),
- une teneur (c130) en phosphore de la troisième couche de placage (130) est au plus égale à la moitié d'une teneur (c110) en phosphore de la première couche de placage (110), et
- la première couche de placage (110) comprend au moins 8 g/m² de phosphore, moyennant quoi
- le panneau de contreplaqué (100) est résistant au feu selon la norme EN 13501-1:2007+A1:2009
• comme indiqué par les classes
o comportement au feu B,
o production de fumée s1, et
o gouttelettes enflammées d0, ou
• comme indiqué par les classes
o comportement au feu B_{fl} et
o production de fumée s1.

12. Panneau de contreplaqué selon la revendication 11, dans lequel
- la deuxième couche de placage (120) forme une seconde surface (122) du panneau de contreplaqué,
- la seconde surface (122) comprend des traces indiquant le ponçage de la seconde surface (122) du panneau de contreplaqué (100) dans une seconde direction de ponçage (R2) qui forme un angle d'au moins 30 degrés avec une direction de grain (D2) de la deuxième couche de placage (120), et
- la deuxième couche de placage (120) comprend au moins 8 g/m² de phosphore ;
de préférence,
- la direction de grain (D1) de la première couche de placage (110) est parallèle à la direction de grain (D2) de la deuxième couche de placage (120).

13. Panneau de contreplaqué (100) selon la revendication 11 ou 12, dans lequel
- une teneur (c130) en phosphore de la troisième couche de placage (130) est au plus égale à 25 % d'une teneur (c110) en phosphore de la première couche de placage (110) .

14. Panneau de contreplaqué (100) selon la revendication 11, 12 ou 13, dans lequel
- la troisième couche de placage (130) comprend au plus 5 g/m² ou au plus 2 g/m² de phosphore.

15. Panneau de contreplaqué (100) selon l'une quelconque des revendications 11 à 14, dans lequel
- le panneau a une augmentation de poids inférieure à 30 % lors de l'essai détaillé dans le document « Nodrtest Method, build 504, Approved 2003-12 ».

16. Panneau de contreplaqué (100) selon l'une quelconque des revendications 11 à 15, dans lequel
- le panneau de contreplaqué (100) comprend cinq couches de placage d'épicéa,
- l'épaisseur (tₚ) du panneau de contreplaqué (100) est de 15 mm, et
- le panneau de contreplaqué (100) a les propriétés mécaniques suivantes
• une première résistance à la flexion (f_{m∥}) de 37 N/mm² à 52 N/mm² telle que mesurée lors d'un essai longitudinal de la norme EN310,
• une seconde résistance à la flexion (f_{m⊥}) de 19 N/mm² à 28 N/mm² telle que mesurée lors d'un essai transversal de la norme EN310,
• un premier module d'élasticité (E_{∥}) de 4 600 N/mm² à 6 000 N/mm² tel que mesuré lors d'un essai longitudinal de la norme EN310, et
• un second module d'élasticité (E⊥) de 1 800 N/mm² à 2 700 N/mm² tel que mesuré lors d'un essai transversal de la norme EN310.

17. Panneau de contreplaqué (100) selon l'une quelconque des revendications 11 à 15, dans lequel
- le panneau de contreplaqué (100) comprend sept couches de placage d'épicéa,
- l'épaisseur (tₚ) du panneau de contreplaqué (100) est de 18 mm, et
- et le panneau de contreplaqué (100) a les propriétés mécaniques suivantes
• une première résistance à la flexion (f_{m∥}) de 37 N/mm² à 53 N/mm² telle que mesurée lors d'un essai longitudinal de la norme EN310,
• une seconde résistance à la flexion (f_{m⊥}) de 27 N/mm² à 44 N/mm² telle que mesurée lors d'un essai transversal de la norme EN310,
• un premier module d'élasticité (E_{∥}) de 4 800 N/mm² à 6 800 N/mm² tel que mesuré lors d'un essai longitudinal de la norme EN310, et
• un second module d'élasticité (E⊥) de 2 800 N/mm² à 4 300 N/mm² tel que mesuré lors d'un essai transversal de la norme EN310.

18. Procédé selon l'une quelconque des revendications 1 à 10 ou panneau de contreplaqué selon l'une quelconque des revendications 11 à 17, dans lequel
- la première couche de placage (110) comprend du bois tendre, tel que de l'épicéa ou du pin ;
de préférence,
- la deuxième couche de placage (120) comprend également du bois tendre, tel que de l'épicéa ou du pin ; de préférence
- toutes les couches de placage du panneau de contreplaqué sont constituées de la même essence de bois.

19. Procédé selon l'une quelconque des revendications 1 à 10 ou 18 ou panneau de contreplaqué selon l'une quelconque des revendications 11 à 18, dans lequel
- l'épaisseur du panneau de contreplaqué (100) est de 4 mm à 75 mm, telle que de 9 mm à 21 mm et
- le panneau de contreplaqué (100) comprend de trois à vingt-cinq couches de placage (110, 120, 130), chacune étant constituée de bois tendre ;
de préférence,
- l'épaisseur du panneau de contreplaqué (100) est d'au moins 15 mm,
- l'épaisseur (tsv1) de la première couche de placage (110) est de 1,5 mm à 3,5 mm et l'épaisseur (tsv2) de la deuxième couche de placage (120) est de 1,5 mm à 3,5 mm ;
- le panneau de contreplaqué (100) comprend au moins cinq couches de placage (110, 120, 130), chacune étant constituée de bois tendre, et
- le panneau a une première résistance à la flexion (f_{m∥}) d'au moins 37 N/mm², une seconde résistance à la flexion (f_{m⊥}) d'au moins 19 N/mm², un premier module d'élasticité (E_{∥}) d'au moins 4 600 N/mm², et un second module d'élasticité (E⊥) d'au moins 1 800 N/mm², tels que mesurés et définis dans la norme EN 310.

20. Procédé selon l'une quelconque des revendications 1 à 10 ou 18 ou 19 ou panneau de contreplaqué selon l'une quelconque des revendications 11 à 18, dans lequel
- l'adhésif (190) comprend une résine phénolformaldéhyde polymérisée et/ou une résine ligninephénol-formaldéhyde polymérisée.
